(19) Europäisches Patentamt / European Patent Office / Office européen des brevets

(11) **EP 3 501 979 B1**

(12) **FASCICULE DE BREVET EUROPEEN**

(45) Date de publication et mention de la délivrance du brevet:
**29.04.2020 Bulletin 2020/18**

(51) Int Cl.:
**B64C 11/18** (2006.01)     **B64C 27/467** (2006.01)

(21) Numéro de dépôt: **18201574.3**

(22) Date de dépôt: **19.10.2018**

(54) **ENVELOPPES AERODYNAMIQUES EPAISSES POUR COLS DE PALES ET CARENAGES DE MANCHONS DE PALES D'UN ROTOR D'UN AERONEF**

DICKE AERODYNAMISCHE PROFILE FÜR ROTORBLÄTTERHÄLSE, UND MUFFENVERKLEIDUNGEN DER ROTORBLÄTTER EINES LUFTFAHRZEUG-ROTORS

THICK AERODYNAMIC PROFILES FOR BLADE NECKS AND BLADE SLEEVE FAIRINGS FOR AN AIRCRAFT ROTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2017 FR 1771420**

(43) Date de publication de la demande:
**26.06.2019 Bulletin 2019/26**

(73) Titulaire: **AIRBUS HELICOPTERS**
**13725 Marignane Cedex (FR)**

(72) Inventeurs:
• **ALFANO, David**
**13880 Velaux (FR)**
• **DESVIGNE, Damien**
**13090 Aix-en-Provence (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A2- 0 149 021     EP-A2- 0 351 577**
**FR-A1- 2 252 916     GB-A- 1 427 158**
**US-B2- 9 359 071**

**Description**

La présente invention est du domaine des surfaces aérodynamiques et plus particulièrement des surfaces aérodynamiques formant une voilure tournante.

La présente invention concerne une enveloppe aérodynamique épaisse destinée à former un col de pale ou bien un manchon de pale, ainsi qu'un rotor muni d'une telle enveloppe aérodynamique épaisse et un aéronef à voilure tournante muni d'un tel rotor. La présente invention concerne également une méthode d'obtention d'une telle enveloppe aérodynamique épaisse.

Un aéronef à voilure tournante comporte un fuselage portant un ou plusieurs rotors sustentateurs. Ce fuselage se prolonge longitudinalement vers l'arrière par une poutre de queue susceptible de porter un ou plusieurs empennages permettant d'assurer une stabilité aérodynamique à l'aéronef ainsi qu'un rotor arrière anticouple en lacet. Un aéronef à voilure tournante peut également comporter des rotors de part et d'autre du fuselage, constituant des hélices propulsives permettant d'atteindre des grandes vitesses d'avancement. De tels aéronefs sont généralement désignés « hélicoptères hybrides ».

Chaque rotor, qu'il soit un rotor sustentateur, un rotor arrière anticouple ou bien une hélice propulsive, comporte un moyeu tournant et plusieurs pales. Chaque pale est liée au moyeu et est entraînée en rotation par le moyeu.

Classiquement, une telle pale s'étend longitudinalement selon son envergure d'une première extrémité désignée « pied de pale » et destinée à être fixée au moyeu vers une seconde extrémité libre. On remarque que le terme « longitudinal » se comprend comme au sens de l'envergure de la pale. De plus, la pale s'étend transversalement d'un bord d'attaque vers un bord de fuite, selon les cordes de la pale. La pale comprend notamment un revêtement extérieur ainsi que des sections transversales successives positionnées radialement en envergure selon un rayon rotor donné par rapport au centre de rotation du rotor. Chaque section transversale est définie par un profil aérodynamique.

La pale comporte le pied de pale, une partie profilée et un col de pale reliant le pied de pale au rayon de début de cette partie profilée. La partie profilée assure l'essentiel des performances aérodynamique de la pale et en particulier la portance de la pale, cette partie profilée représentant une portion plus ou moins longue de la pale. On entend par rayon de début de la partie profilée le rayon d'apparition des profils aérodynamiques à bord de fuite effilé ou fin de la pale.

Des profils aérodynamiques existants et utilisés fréquemment pour la partie profilée des pales des rotors d'aéronefs sont par exemple définis selon les familles *NACA* ou bien les familles *OA,* les familles *OA* étant par exemple décrites dans les documents FR 2626841 et FR 2765187.

Classiquement, les sections transversales du col de pale sont définies d'une part par la jonction géométrique entre le pied de pale et le début de partie profilée et d'autre part par l'imposition d'une enveloppe aérodynamique épaisse pour le col de pale.

Une pale est reliée au moyeu du rotor par un dispositif structurel de jonction qui peut être caréné afin de réduire en particulier sa traînée aérodynamique et le sillage généré. Un tel dispositif structurel de jonction est désigné généralement par le terme « manchon » ou bien le terme « manchette ». Le terme « manchette » est utilisé plus particulièrement dans le cas d'un rotor dit « rigide ». Par souci de simplification, on utilisera pour la suite de la description uniquement le terme « manchon » pour désigner aussi bien un manchon qu'une manchette.

Un aéronef à voilure tournante présente l'avantage de pouvoir évoluer aussi bien à des vitesses d'avancement élevées lors de vols de croisière qu'à de très faibles vitesses d'avancement et de réaliser également des vols stationnaires.

Lors de la rotation du rotor et en vol d'avancement de l'aéronef, une pale est dite « pale avançante » lorsqu'elle tourne en se déplaçant de l'arrière de l'aéronef vers l'avant de l'aéronef. A contrario, une pale est dite « pale reculante » lorsqu'elle tourne en se déplaçant de l'avant de l'aéronef vers l'arrière de l'aéronef.

Lors de vols stationnaires ou bien à faibles vitesses d'avancement, chaque pale, qu'elle soit avançante ou bien reculante, est balayée par un flux d'air sensiblement identique et généré principalement par la rotation du rotor et, par suite, par la rotation des pales. Ce flux d'air provoque l'apparition de forces aérodynamiques, notamment une force aérodynamique de portance permettant de sustenter l'aéronef.

Lors de vols d'avancement vers l'avant à des vitesses d'avancement plus élevées, chaque pale est balayée par deux flux d'air. D'une part, un premier flux d'air est généré par la rotation du rotor et d'autre part, un second flux d'air est généré par l'avancement de l'aéronef. Pour une pale avançante, ces deux flux d'air s'ajoutent alors que pour une pale reculante, ces deux flux d'air s'opposent. Ces deux flux d'air provoquent l'apparition de forces aérodynamiques, notamment une force aérodynamique de portance permettant de sustenter l'aéronef, voire de le propulser, ainsi qu'une force aérodynamique de traînée tendant à s'opposer à l'avancement de l'aéronef.

De plus, un rotor traversant le second flux d'air généré par l'avancement de l'aéronef provoque la production d'un sillage à l'arrière de ce rotor. Ce sillage peut présenter des instationnarités de fortes amplitudes ainsi qu'une signature fréquentielle de type harmonique, de type large-bande, ou bien la superposition des deux. Ces instationnarités sont dues notamment à la forme des éléments constituant la partie centrale du rotor, à savoir le moyeu, les cols de pales et les manchons, à leurs interactions aérodynamiques avec les deux flux d'air, mais aussi à la rotation des pales et des manchons ainsi qu'à leurs orientations vis-à-vis du flux d'air variant lors de cette rotation, notamment dans une zone particulière du rotor appelée « cercle d'inversion » par l'homme du métier.

Ces instationnarités, par leurs impacts sur les éléments de l'aéronef situés à l'arrière du rotor principal, et en particulier la poutre de queue et les empennages horizontaux ou verticaux de l'aéronef, ont pour conséquence notamment une réduction des qualités de vol de l'aéronef, les éléments situés à l'arrière du rotor principal étant alimentés avec de l'air fortement perturbé, ainsi que l'apparition de vibrations sur ces éléments, phénomène connu sous l'expression en langue anglaise « tail-shake ». Ces vibrations sont ensuite transmises à la cabine de l'aéronef par la structure de l'aéronef, générant de l'inconfort pour l'équipage, et pouvant également endommager des équipements embarqués.

Le cercle d'inversion est la zone dans laquelle la vitesse locale du premier flux d'air dû à la rotation de la pale est inférieure à la vitesse de translation du second flux d'air dû à l'avancement de l'aéronef. Ce cercle d'inversion est situé dans le secteur azimutal correspondant à une pale reculante, à proximité du moyeu du rotor. Ce cercle d'inversion impacte généralement le manchon, le col de pale ainsi qu'une portion plus ou moins longue de la partie profilée de la pale, en fonction du rapport d'avancement, ce rapport d'avancement étant défini comme le rapport de la vitesse d'avancement de l'aéronef par la composante de vitesse à l'extrémité de la pale due à la rotation seule du rotor : plus le rapport d'avancement est élevé, plus le cercle d'inversion est grand en envergure et en azimut.

Par ailleurs, l'angle d'incidence du second flux d'air généré par l'avancement de l'aéronef sur ces éléments du rotor proches du moyeu peut être modifié par la présence, à proximité de ces éléments du rotor, du fuselage de l'aéronef, et en particulier de capots protégeant son installation motrice. Dès lors, le flux d'air combiné balayant ces éléments du rotor proches du moyeu peut voir son angle d'incidence augmenté aussi bien pour une pale avançante que pour une pale reculante, typiquement d'un angle de 0 à 10 degrés.

En conséquence, les éléments du rotor inclus dans le cercle d'inversion subissent, lors de leurs mouvements combinés de rotation autour du moyeu et de translation liés à l'avancement de l'aéronef, un flux d'air combiné les impactant par le bord de fuite dans le cercle d'inversion avec un angle d'incidence positif qui peut être important. En conséquence, la forme de ces éléments du rotor inclus dans le cercle d'inversion n'est généralement pas adaptée à ce vent incident inversé et leur comportement aérodynamique est alors dégradé. En particulier, un décollement important du flux d'air s'accompagnant de valeurs importantes de traînée aérodynamique apparaît. Un sillage se produit également sur ces éléments du rotor et des instationnarités caractérisant ce sillage apparaissent.

En dehors du cercle d'inversion et pour une pale avançante, le flux d'air combiné impacte classiquement les éléments du rotor par le bord d'attaque provoquant un comportement aérodynamique attendu de ces éléments. Cependant, à proximité du moyeu, l'angle d'incidence de ce flux d'air combiné peut être significatif. Par suite, la forme de ces éléments du rotor à proximité du moyeu n'est généralement pas adaptée, une traînée aérodynamique importante pouvant apparaître ainsi qu'éventuellement un sillage.

De plus, ces phénomènes peuvent être amplifiés pour les hélicoptères hybrides. En effet, aux grandes vitesses d'avancement des hélicoptères hybrides, la vitesse de rotation du rotor peut être réduite. Dès lors, le vent incident inversé impacte le bord de fuite de ces éléments du rotor inclus dans le cercle d'inversion avec une vitesse plus importante.

La partie profilée de la pale est généralement formée par une enveloppe aérodynamique dite « mince », l'épaisseur relative de chaque profil aérodynamique de cette enveloppe mince étant par exemple inférieure ou égale à 13%. Pour rappel, l'épaisseur relative d'un profil est le rapport entre l'épaisseur maximale de ce profil par sa corde, la corde étant la distance entre le bord d'attaque et le bord de fuite du profil. Cette épaisseur relative est exprimée en pourcentage dans le texte. Le col de pale et le manchon, lorsqu'il est caréné, sont généralement formés par des enveloppes dites « épaisses », dont l'épaisseur relative est plus importante, par exemple comprise entre 20% et 150%.

En particulier, le col de pale, le pied de pale et le manchon, lorsqu'il est caréné, peuvent avoir une forme pseudo-elliptique épaisse, avec une épaisseur relative par exemple comprise entre 20% et 100% afin de s'adapter au mieux à la spécificité des écoulements aux flux d'air qu'ils sont susceptibles de rencontrer lors d'un vol d'avancement dans le cercle d'inversion, à savoir un flux d'air dirigé du bord d'attaque vers le bord de fuite sur une « pale avançante » et un flux d'air inversé dirigé du bord de fuite vers le bord d'attaque sur une « pale reculante ». De plus, une forme pseudo-elliptique épaisse permet également de caréner le dispositif structurel de jonction entre le pied de pale et le moyeu du rotor.

Une telle enveloppe aérodynamique épaisse n'a pas pour fonction principale de générer une force aérodynamique de portance, mais d'assurer la raideur et la tenue mécanique de la pale pour un col de pale ou bien de limiter la traînée aérodynamique générée pour un manchon assurant le carénage d'un dispositif structurel de jonction entre une pale et le moyeu du rotor. Cependant, ces formes pseudo-elliptiques épaisses présentent des inconvénients, telles que l'apparition de décollements importants du flux d'air et d'instationnarités. De plus, la trainée aérodynamique est certes diminuée par rapport à un dispositif structurel de jonction non caréné, mais reste significative, représentant généralement de 10 à 15% de la traînée aérodynamique totale générée par un aéronef conventionnel à voilure tournante. On entend par « aéronef conventionnel à voilure tournante » un aéronef muni d'un rotor sustentateur et d'un rotor arrière anticouple positionné à l'arrière d'une poutre de queue.

L'art antérieur comporte diverses solutions permettant d'améliorer le comportement aérodynamique d'une surface aérodynamique épaisse balayée par un flux d'air.

Par exemple, on connait les documents EP 2593670, US 5474425 et US 2012/057987 qui décrivent des pales destinées à un rotor d'éolienne dont le pied de pale est formé par un profil épais. Ces documents sont toutefois éloignés de l'invention car concernant des pales ne subissant pas de flux d'air inversés.

Dans le domaine des aéronefs à voilure tournante, une protubérance peut être agencée au bord de fuite et éventuellement au bord d'attaque d'un manchon d'une pale d'un rotor. Cette protubérance permet de favoriser la pénétration du manchon dans le flux d'air et de limiter ainsi l'apparition de perturbations aérodynamiques aussi bien pour une pale avançante que pour une pale reculante.

La présente invention a pour but de réduire les limitations mentionnées ci-dessus et de limiter les perturbations aérodynamiques générées par un rotor d'un aéronef, en particulier lors de vols d'avancement, notamment en réduisant la traînée aérodynamique de ce rotor et en limitant la production d'un sillage.

L'invention concerne une enveloppe aérodynamique épaisse destinée à être agencée entre un moyeu tournant d'un rotor d'un aéronef et une partie profilée de chaque pale de ce rotor, l'enveloppe aérodynamique épaisse permettant de réduire les décollements du flux d'air, la traînée aérodynamique et la production d'un sillage aussi bien du côté avançant que reculant de cette enveloppe aérodynamique épaisse.

L'invention concerne également une pale comportant cette enveloppe aérodynamique épaisse constituant le col de la pale. L'invention concerne aussi un rotor destiné à un aéronef à voilure tournante ainsi qu'un aéronef à voilure tournante.

L'invention concerne aussi une méthode d'obtention d'une telle enveloppe aérodynamique épaisse. Cette méthode permet d'une part la détermination des profils aérodynamiques épais formant une telle enveloppe aérodynamique épaisse et d'autre part l'obtention de cette enveloppe aérodynamique épaisse. Ces profils aérodynamiques épais sont ainsi pris en compte pour la réalisation du moule permettant la fabrication de l'enveloppe aérodynamique épaisse ou bien lors de l'usinage de cette enveloppe aérodynamique épaisse.

La présente invention a donc pour objet une enveloppe aérodynamique épaisse destinée à être agencée entre un moyeu tournant d'un rotor d'un aéronef et une partie profilée d'une pale du rotor, l'enveloppe aérodynamique épaisse s'étendant d'une part, selon une direction longitudinale X en envergure d'une première zone extrémale vers une seconde zone extrémale et d'autre part, selon une direction transversale Y d'un bord d'attaque vers un bord de fuite, l'enveloppe aérodynamique épaisse étant formée par une succession de profils aérodynamiques épais situés dans des plans parallèles à un plan transversal $P_{YZ}$ perpendiculaire à la direction longitudinale X en envergure, chaque profil aérodynamique épais comportant un profil d'extrados et un profil d'intrados, chaque profil aérodynamique épais étant défini par une corde $c$ entre le bord d'attaque et le bord de fuite, une épaisseur $t$ égale à une distance maximale entre le profil d'extrados et le profil d'intrados mesurée perpendiculairement à la corde $c$ et une épaisseur relative $t/c$ égale au rapport de l'épaisseur maximale $t$ par la corde $c$, l'épaisseur relative $t/c$ étant supérieure ou égale à 20% pour chaque profil aérodynamique épais.

Chaque profil aérodynamique passe par des points extrêmes $C0, C1, C2, C3$, chaque point extrême $C0, C1, C2, C3$ étant défini dans un repère (U,V) attaché audit profil aérodynamique et défini par un axe des abscisses U formé par la direction de ladite corde $c$ et un axe des ordonnées V perpendiculaire à l'axe des abscisses U, une unité de ces axes des abscisses U et des ordonnées V étant égale à la corde $c$, la corde $c$ de chaque profil aérodynamique étant ainsi considérée unitaire dans le repère (U,V), un premier point extrême $C0$ de coordonnées (1,0) étant situé au niveau du bord d'attaque, un deuxième point extrême $C2$ de coordonnées (0,0) étant situé au niveau du bord de fuite, deux troisième et quatrième points extrêmes $C1, C3$ formant l'épaisseur maximale $t$ du profil aérodynamique, des tangences de chaque profil aérodynamique au niveau des troisième et quatrième points extrêmes $C1, C3$ étant définies parallèles à l'axe des abscisses U.

La direction transversale Y est de préférence perpendiculaire à la direction longitudinale X en envergure. Une direction d'élévation Z est définie perpendiculairement aux directions longitudinale X et transversale Y afin de former un repère orthogonal direct (X,Y,Z). Le plan transversal $P_{YZ}$ perpendiculaire à la direction longitudinale X est ainsi défini par les directions transversale Y et d'élévation Z.

L'enveloppe aérodynamique épaisse selon l'invention est remarquable en ce que les coordonnées $(uCi, vCi)$ des troisième et quatrième points extrêmes $C1, C3$ dans le repère (U,V) sont définis en fonction de l'épaisseur relative $t/c$ et situées dans des intervalles de variation bornés par des valeurs basses B et hautes H selon le tableau suivant :

| $t/c$ | | $uC_1$ | $vC_1$ | $uC_3$ | $vC_3$ |
|---|---|---|---|---|---|
| 20% | B | 0,55 | 0,12 | 0,55 | -0,08 |
| | H | 0,70 | 0,16 | 0,75 | -0,04 |
| 25% | B | 0,63 | 0,14 | 0,55 | -0,11 |
| | H | 0,73 | 0,19 | 0,75 | -0,06 |

(suite)

| $t/c$ | | $uC_1$ | $vC_1$ | $uC_3$ | $vC_3$ |
|---|---|---|---|---|---|
| 30% | B | 0,65 | 0,18 | 0,62 | -0,12 |
| | H | 0,75 | 0,22 | 0,72 | -0,08 |
| 35% | B | 0,65 | 0,20 | 0,62 | -0,15 |
| | H | 0,75 | 0,24 | 0,73 | -0,11 |
| 40% | B | 0,48 | 0,23 | 0,45 | -0,17 |
| | H | 0,63 | 0,28 | 0,65 | -0,12 |
| 50% | B | 0,35 | 0,28 | 0,37 | -0,22 |
| | H | 0,49 | 0,37 | 0,57 | -0,13 |
| 60% | B | 0,25 | 0,34 | 0,30 | -0,26 |
| | H | 0,42 | 0,45 | 0,50 | -0,15 |
| 70% | B | 0,20 | 0,44 | 0,20 | -0,26 |
| | H | 0,40 | 0,56 | 0,30 | -0,14 |
| 80% | B | 0,36 | 0,47 | 0,19 | -0,33 |
| | H | 0,52 | 0,57 | 0,31 | -0,23 |
| 90% | B | 0,37 | 0,47 | 0,20 | -0,43 |
| | H | 0,52 | 0,59 | 0,30 | -0,31 |
| 100% | B | 0,40 | 0,45 | 0,22 | -0,55 |
| | H | 0,50 | 0,60 | 0,32 | -0,40 |

Cette enveloppe aérodynamique épaisse est destinée à être agencée sur un rotor d'un aéronef, et en particulier à former un col de pale reliant le pied de pale de la pale à la partie profilée de la pale, et plus précisément au rayon de début de cette partie profilée, ou bien un manchon de pale assurant le carénage d'un dispositif structurel de jonction reliant une pale au moyeu du rotor. Ce rotor peut être un rotor sustentateur, un rotor arrière anticouple ou bien une hélice propulsive d'un aéronef.

Un rotor d'un aéronef comporte un moyeu tournant et au moins deux pales entraînées en rotation par le moyeu tournant, chaque pale étant reliée au moyeu par un dispositif structurel de jonction. La pale comporte un pied de pale, une partie profilée et un col de pale, la partie profilée représentant une portion plus ou moins longue de la pale formée de préférence par des profils aérodynamiques minces. Cette partie profilée assure l'essentiel des performances aérodynamiques de la pale et en particulier de sa portance.

Ces intervalles de variation bornés pour les coordonnées *(uCi,vCi)* des troisième et quatrième points extrêmes *C1,C3* imposent que les abscisses de ces troisième et quatrième points extrêmes *C1,C3* soient situées dans un premier intervalle [0,15.*c*,0,85.*c*] afin d'éviter avantageusement de fortes distorsions de chaque profil aérodynamique de l'enveloppe aérodynamique épaisse. En effet, l'interdiction ainsi imposée que ces troisième et quatrième points extrêmes *C1,C3* soient situés dans des zones proches du bord d'attaque et du bord de fuite, à savoir couvrant 15% de la corde *c* à partir du bord d'attaque correspondant au premier point extrême *C0* et du bord de fuite correspondant au deuxième point extrême *C2,* conduit à ce que l'épaisseur maximale *t* de chaque profil aérodynamique soit située dans une zone centrale de chaque profil aérodynamique couvrant le premier intervalle.

En conséquence, la zone centrale de chaque profil aérodynamique peut contenir une section rectangulaire de hauteur et de largeur significatives, voire une section carrée, permettant par exemple, de loger un dispositif structurel de jonction lorsque l'enveloppe aérodynamique épaisse forme un manchon de pale. Cette zone centrale de chaque profil aérodynamique permet également, lorsque l'enveloppe aérodynamique épaisse forme un col de pale que ce col de pale ait une raideur et une tenue mécanique importantes.

De plus, ces intervalles de variation bornés pour les coordonnées *(uCi,vCi)* des troisième et quatrième points extrêmes *C1,C3* imposent que l'ordonnée du troisième point extrême *C1,* situé sur le profil d'extrados, soit comprise dans un deuxième intervalle [0,02. $(^t/_c)$,0,98. $(^t/_c)$] afin d'une part d'imposer une cambrure du profil aérodynamique et d'autre part de limiter cette cambrure. De la sorte, le profil aérodynamique est cambré, tout en évitant d'obtenir un profil aérodynamique avec une trop forte cambrure. Par ailleurs, l'ordonnée du quatrième point extrême *C3* est alors telle que la distance entre les troisième et quatrième points extrêmes *C1,C3* mesurée parallèlement à l'axe des ordonnées V est égale à l'épaisseur maximale *t* du profil aérodynamique.

L'enveloppe aérodynamique épaisse ainsi définie permet avantageusement, lors d'un vol d'avancement de l'aéronef, de réduire les décollements du flux d'air aussi bien pour une pale avançante que pour une pale reculante. En effet, une telle enveloppe aérodynamique épaisse permet notamment d'améliorer la pénétration dans le flux d'air de l'enveloppe aérodynamique épaisse pour une pale reculante, le flux d'air circulant alors du bord de fuite vers le bord d'attaque, sans dégrader cette pénétration dans le flux d'air pour une pale avançante, la finesse de l'enveloppe aérodynamique épaisse étant maximisée dans ce cas. De fait, cette enveloppe aérodynamique épaisse est adaptée à des conditions d'écoulements très différentes correspondant aux différentes positions en azimut des pales lors d'un tour du rotor. En particulier, le comportement aérodynamique de l'enveloppe aérodynamique épaisse reculante lors de sa rotation est amélioré significativement.

De la sorte, cette enveloppe aérodynamique épaisse permet de réduire la traînée aérodynamique générée et la production d'un sillage ainsi que de limiter l'amplitude des instationnarités contenues dans ce sillage et la signature fréquentielle de ce sillage.

Les cols de pales des pales du rotor sont, pour un aéronef n'utilisant pas une telle enveloppe aérodynamique épaisse, responsables d'environ 7 à 10% de la trainée aérodynamique totale d'un aéronef conventionnel en vol d'avancement et les manchons sont responsables de 10 à 15% de cette trainée aérodynamique totale. En conséquence, la réduction de trainée aérodynamique générée par une telle enveloppe aérodynamique épaisse selon l'invention appliquée au col de pale et/ou au manchon de chaque pale du rotor permet donc une réduction sur environ 17% à 25% de la traînée aérodynamique totale d'un aéronef et permet donc un gain significatif sur les performances de l'aéronef en vol d'avancement.

De plus, cette réduction de la traînée aérodynamique des cols de pales et des manchons a aussi un effet lors des vols stationnaires de l'aéronef à voilure tournante en permettant une réduction du couple rotor en vol stationnaire.

Chaque profil aérodynamique de l'enveloppe épaisse selon l'invention permet avantageusement de limiter l'apparition de perturbations aérodynamiques, telles que des traînées aérodynamiques et un sillage notamment, aussi bien lorsqu'un flux d'air balaye ce profil aérodynamique du bord d'attaque vers le bord de fuite que du bord de fuite vers le bord d'attaque. Notamment, la finesse aérodynamique de chaque profil aérodynamique est maximisée pour un flux d'air le balayant du bord d'attaque vers le bord de fuite, par exemple avec un angle d'incidence positif compris entre 5 et 15 degrés. De même, la trainée aérodynamique est minimisée pour un flux d'air le balayant du bord de fuite vers le bord d'attaque, par exemple avec un angle d'incidence positif compris entre 165 et 175 degrés.

Les profils aérodynamiques de cette enveloppe aérodynamique épaisse permettent avantageusement également d'augmenter la portance aérodynamique générée en vol stationnaire et en vol d'avancement de l'aéronef par rapport aux profils aérodynamiques utilisés traditionnellement sur les cols de pales et les manchons de pales. Cette augmentation de portance contribue à augmenter la marge disponible sur les performances aérodynamiques du rotor de l'aéronef ainsi qu'à augmenter le flux d'air induit vers le bas par cette zone de chaque pale proche du moyeu. Cette augmentation du flux d'air induit vers le bas permet, dans certaines conditions de vols, par exemple pour de faibles vitesses d'avancement ou bien en vol stationnaire, des gains importants de performances en diminuant le risque d'une recirculation d'air susceptible d'entraîner une ingestion par un moteur de l'aéronef des gaz chaud qu'il produit lui-même.

En outre, les courbes formant chaque profil aérodynamique doivent être convexes et non-rétrogrades. En effet, la présence d'un point d'inflexion ou d'un point de rebroussement ainsi que d'une rétrogradation sur un profil aérodynamique aurait pour conséquence une dégradation plus ou moins importante des performances aérodynamique de ce profil aérodynamique incompatible avec les objectifs recherchés.

Pour chaque profil aérodynamique, des valeurs optimisées pour les coordonnées *(uCi,vCi)* des troisième et quatrième points extrêmes *C1,C3* sont définies en fonction de l'épaisseur relative $^t/_c$ du profil aérodynamique dans le tableau suivant :

| t/c | uC$_1$ | vC$_1$ | uC$_3$ | vC$_3$ |
|-----|------|-------|------|--------|
| 20% | 0,65 | 0,148 | 0,65 | -0,052 |
| 25% | 0,71 | 0,17 | 0,66 | -0,08 |
| 30% | 0,72 | 0,20 | 0,66 | -0,10 |
| 35% | 0,69 | 0,22 | 0,68 | -0,13 |
| 40% | 0,55 | 0,26 | 0,51 | -0,14 |
| 50% | 0,42 | 0,325 | 0,42 | -0,175 |

(suite)

| t/c | $uC_1$ | $vC_1$ | $uC_3$ | $vC_3$ |
|------|--------|--------|--------|--------|
| 60% | 0,32 | 0,39 | 0,35 | -0,21 |
| 70% | 0,31 | 0,50 | 0,23 | -0,20 |
| 80% | 0,42 | 0,54 | 0,24 | -0,28 |
| 90% | 0,44 | 0,555 | 0,26 | -0,345 |
| 100% | 0,445 | 0,565 | 0,275 | -0,435 |

De plus, les tangences de chaque profil aérodynamique de l'enveloppe aérodynamique épaisse au niveau des premier et deuxième points extrêmes *C0, C2,* à savoir le bord d'attaque et le bord de fuite de chaque profil aérodynamique, peuvent être imposées et définies parallèles à l'axe des ordonnées V.

En outre, des profils aérodynamiques épais intermédiaires ayant une épaisseur relative $^t/_c$ intermédiaire comprise entre deux épaisseurs relatives inférieure $(^t/_c)_{min}$ et supérieure $(^t/_c)_{max}$ fournies dans un de ces tableaux peuvent être obtenus par interpolations de deux profils aérodynamiques épais correspondant aux épaisseurs relatives inférieure $(^t/_c)_{min}$ et supérieure $(^t/_c)_{max}$. Il ne s'agit donc pas dans ce cas de profils aérodynamiques épais optimisés à proprement parlé car ils ne sont pas le résultat d'un processus d'optimisation, mais le résultat d'une interpolation de deux profils aérodynamiques épais optimisés.

Toutefois, de tels profils aérodynamiques épais intermédiaires permettent avantageusement de se rapprocher, voire d'atteindre les objectifs recherchés, sans avoir à dérouler un processus d'optimisation.

Les coordonnées $(u,v)$ de chaque point formant un profil aérodynamique épais intermédiaire sont définies par interpolation, telle une interpolation polynomiale, par exemple une interpolation linéaire, quadratique ou d'un autre ordre, à partir d'un premier profil aérodynamique ayant une épaisseur relative inférieure $(^t/_c)_{min}$ et d'un second profil aérodynamique ayant une épaisseur relative supérieure $(^t/_c)_{max}$ construits par exemple à partir d'un des tableaux précédemment cités.

L'ordonnée *v* de chaque point du profil aérodynamique épais intermédiaire ayant l'épaisseur relative $^t/_c$ est déterminée par exemple par une interpolation linéaire selon la relation suivante :

$$v = \frac{(t/c)-(t/c)_{\min}}{(t/c)_{\max}-(t/c)_{\min}} v_{max} + \left(1 - \frac{(t/c)-(t/c)_{\min}}{(t/c)_{\max}-(t/c)_{\min}}\right) v_{min},$$

$v_{min}$ étant une première ordonnée du point du premier profil aérodynamique ayant la même abscisse *u* que le point de coordonnées $(u,v)$ du profil aérodynamique épais intermédiaire, et $v_{max}$ étant une deuxième ordonnée du point du deuxième profil aérodynamique ayant la même abscisse u que le point de coordonnées $(u,v)$ du profil aérodynamique épais intermédiaire.

La présente invention a aussi pour objet une pale comportant une enveloppe aérodynamique épaisse telle que précédemment décrite, une partie profilée et un pied de pale, l'enveloppe aérodynamique épaisse constituant un col de pale reliant le pied de pale à la partie profilée.

La présente invention a aussi pour objet un rotor d'un aéronef comportant un moyeu, au moins deux pales munies respectivement d'une partie profilée et d'un pied de pale. Chaque pale comporte une enveloppe aérodynamique épaisse telle que précédemment décrite constituant un col de pale et reliant le pied de pale à la partie profilée de sorte à réduire la traînée aérodynamique et la production d'un sillage du rotor ainsi qu'à limiter l'amplitude des instationnarités contenues dans le sillage et à réduire une signature fréquentielle du sillage lors de la rotation du rotor et l'avancement de l'aéronef. Ce rotor peut être un rotor sustentateur, un rotor arrière anticouple ou bien une hélice propulsive d'un aéronef.

La présente invention a encore pour objet un rotor d'un aéronef comportant un moyeu, au moins deux pales, des dispositifs structurels de jonction reliant respectivement une pale au moyeu ainsi que des manchons assurant un carénage de chaque dispositif structurel de jonction. Chaque manchon est avantageusement formé par une enveloppe aérodynamique épaisse telle que précédemment décrite de sorte à réduire la traînée aérodynamique et la production d'un sillage du rotor ainsi qu'à limiter l'amplitude des instationnarités contenues dans le sillage et à réduire une signature fréquentielle du sillage lors de la rotation du rotor et l'avancement de l'aéronef. Ce rotor peut être un rotor sustentateur, un rotor arrière anticouple ou bien une hélice propulsive d'un aéronef.

La présente invention a aussi pour objet un rotor d'un aéronef comportant un moyeu, au moins deux pales, des dispositifs structurels de jonction et des manchons. Chaque manchon et chaque col de pale sont avantageusement formés par des enveloppes aérodynamiques épaisses telles que précédemment décrites afin de minimiser notamment la traînée aérodynamique et la production d'un sillage du rotor. Ce rotor peut être un rotor sustentateur, un rotor arrière anticouple ou bien une hélice propulsive d'un aéronef.

La présente invention a enfin pour objet un aéronef à voilure tournante comportant un fuselage, une poutre de queue, éventuellement au moins un empennage horizontal et/ou vertical et au moins un rotor tel que précédemment décrit. Chaque rotor est ainsi avantageusement configuré de sorte d'une part à réduire la production d'un sillage du rotor et les instationnarités caractérisant ce sillage et d'autre part à limiter une excitation fréquentielle et l'apparition de vibrations des éléments de l'aéronef situés à l'arrière du rotor, en particulier de la poutre de queue et de chaque empennage le cas échéant.

La présente invention a également pour objet une méthode d'obtention d'une enveloppe aérodynamique épaisse, telle que précédemment décrite, cette enveloppe aérodynamique épaisse étant destinée à être agencée entre un moyeu tournant d'un rotor d'un aéronef et une partie profilée d'une pale du rotor, l'enveloppe aérodynamique épaisse s'étendant d'une part selon une direction longitudinale X en envergure d'une première zone extrémale vers une seconde zone extrémale et d'autre part selon une direction transversale Y d'un bord d'attaque vers un bord de fuite, l'enveloppe aérodynamique épaisse étant formée par une succession de profils aérodynamiques épais situés dans des plans parallèles à un plan transversal $P_{YZ}$ perpendiculaire à la direction longitudinale X en envergure, chaque profil aérodynamique épais comportant un profil d'extrados et un profil d'intrados, chaque profil aérodynamique épais étant défini par une corde $c$ entre le bord d'attaque et le bord de fuite, une épaisseur $t$ égale à une distance maximale entre le profil d'extrados et le profil d'intrados mesurée perpendiculairement à la corde $c$ et une épaisseur relative $^t/_c$ égale au rapport de l'épaisseur maximale $t$ par la corde $c$, l'épaisseur relative $^t/_c$ étant supérieure ou égale à 20% pour chaque profil aérodynamique épais.

Cette méthode d'obtention d'une enveloppe aérodynamique épaisse comporte les étapes suivantes permettant de définir chaque profil aérodynamique susceptible de constituer cette enveloppe aérodynamique épaisse :

- première création de $(m+1)$ points caractéristiques $A0,...,Ai,...Am$ appartenant au profil aérodynamique, $i$ étant un entier positif variant de 0 à $m$, chaque point caractéristique $Ai$ étant défini dans un repère (U,V) attaché au profil aérodynamique et défini par un axe des abscisses U formé par la direction de la corde $c$ et un axe des ordonnées V perpendiculaire à l'axe des abscisses U, une unité des axes des abscisses U et des ordonnées V étant égale à la corde $c$, la corde $c$ de chaque profil aérodynamique étant considérée unitaire,

- deuxième création de points de contrôle $Bi.1,...,Bi.j,...,Bi.n$, $n$ points de contrôle $Bi.1,...,Bi.j,...,Bi.n$ étant situés respectivement entre deux points caractéristiques consécutifs $Ai,Ai+1$ et étant des points de construction du profil aérodynamique entre deux points caractéristiques consécutifs $Ai,Ai+1$, $n$ étant un entier positif supérieur ou égal à 2, $j$ étant un entier positif variant de 1 à $n$, $(i+1)$ étant remplacé par la valeur nulle « 0 » lorsque $i$ est égal à $m$, et

- détermination d'un profil aérodynamique, $(m+1)$ courbes reliant respectivement deux points caractéristiques consécutifs $Ai,Ai+1$ et étant construites respectivement à partir des points de contrôle $Bi.1,...,Bi.j,..., Bi.n$, les $(m+1)$ courbes étant reliées deux à deux afin de former le profil aérodynamique épais, le profil aérodynamique passant par des points extrêmes $C0,C1,C2,C3$, un premier point extrême $C0$ de coordonnées (1,0) étant situé au niveau du bord d'attaque du profil aérodynamique, un deuxième point extrême $C2$ de coordonnées (0,0) étant situé au niveau du bord de fuite du profil aérodynamique, deux troisième et quatrième points extrêmes $C1,C3$ formant l'épaisseur maximale $t$, les tangences dudit profil aérodynamique au niveau des troisième et quatrième points extrêmes $C1,C3$ étant définies parallèles à l'axe des abscisses U et les coordonnées $(uCi,vCi)$ de ces troisième et quatrième points extrêmes $C1,C3$ dans le repère (U,V) étant définies en fonction de l'épaisseur relative $^t/_c$ et situées dans des intervalles de variation bornés par des valeurs basses B et hautes H selon le tableau suivant :

| $t/c$ | | $uC_1$ | $vC_1$ | $uC_3$ | $vC_3$ |
|---|---|---|---|---|---|
| 20% | B | 0,55 | 0,12 | 0,55 | -0,08 |
| | H | 0,70 | 0,16 | 0,75 | -0,04 |
| 25% | B | 0,63 | 0,14 | 0,55 | -0,11 |
| | H | 0,73 | 0,19 | 0,75 | -0,06 |
| 30% | B | 0,65 | 0,18 | 0,62 | -0,12 |
| | H | 0,75 | 0,22 | 0,72 | -0,08 |
| 35% | B | 0,65 | 0,20 | 0,62 | -0,15 |
| | H | 0,75 | 0,24 | 0,73 | -0,11 |
| 40% | B | 0,48 | 0,23 | 0,45 | -0,17 |
| | H | 0,63 | 0,28 | 0,65 | -0,12 |

(suite)

| $t/c$ | | $uC_1$ | $vC_1$ | $uC_3$ | $vC_3$ |
|---|---|---|---|---|---|
| 50% | B | 0,35 | 0,28 | 0,37 | -0,22 |
| | H | 0,49 | 0,37 | 0,57 | -0,13 |
| 60% | B | 0,25 | 0,34 | 0,30 | -0,26 |
| | H | 0,42 | 0,45 | 0,50 | -0,15 |
| 70% | B | 0,20 | 0,44 | 0,20 | -0,26 |
| | H | 0,40 | 0,56 | 0,30 | -0,14 |
| 80% | B | 0,36 | 0,47 | 0,19 | -0,33 |
| | H | 0,52 | 0,57 | 0,31 | -0,23 |
| 90% | B | 0,37 | 0,47 | 0,20 | -0,43 |
| | H | 0,52 | 0,59 | 0,30 | -0,31 |
| 100% | B | 0,40 | 0,45 | 0,22 | -0,55 |
| | H | 0,50 | 0,60 | 0,32 | -0,40 |

Chaque profil aérodynamique épais ainsi obtenu peut être utilisé afin de définir et fabriquer une enveloppe aérodynamique épaisse destinée à être agencée sur un rotor d'un aéronef. Ce rotor peut être un rotor sustentateur, un rotor arrière anticouple ou bien une hélice propulsive d'un aéronef. Cette enveloppe aérodynamique épaisse est alors formée par une succession des profils aérodynamiques épais situés dans des plans parallèles au plan transversal $P_{YZ}$. Cette enveloppe aérodynamique épaisse est en particulier destinée à former un col de pale reliant le pied de pale de la pale à la partie profilée de la pale ou bien un manchon de pale assurant le carénage d'un dispositif structurel de jonction reliant une pale au moyeu du rotor.

La détermination d'un profil aérodynamique épais est alors réalisée par l'intermédiaire de $(m+1)$ courbes reliées deux à deux respectivement au niveau d'un point caractéristique $Ai$ commun à ces deux courbes. Une telle courbe est par exemple un polynôme de degré $(n+1)$, une spline définie par morceaux par des polynômes ou bien une courbe de Bézier d'ordre $(n+1)$, $n$ étant le nombre de points de contrôle $Bi.j$ nécessaires et suffisants afin de construire cette courbe.

Le nombre minimal de points de contrôle $Bi.j$ permettant la construction de chaque courbe est égal à deux. Ce nombre minimal de points de contrôle $Bi.j$ permet de garantir que la courbe reliant deux points caractéristiques $Ai,Ai+1$ consécutifs ne comporte pas de points d'inflexion. Lorsque le nombre $n$ de points de contrôle $Bi.j$ est égal à deux, chaque courbe reliant deux points caractéristiques $Ai,Ai+1$ consécutifs est par exemple un polynôme de degré 3 ou bien une courbe de Bézier d'ordre 3. Des courbes d'ordre supérieur peuvent être utilisées, à condition que ces courbes ne comportent pas d'oscillations susceptibles de générer des pénalités aérodynamiques sur les enveloppes aérodynamiques épaisses formées par les profils aérodynamiques.

De plus, le profil aérodynamique passe par les points extrêmes $C0,C1,C2,C3$ prédéterminés permettant de caractériser ce profil aérodynamique. Les abscisses des troisième et quatrième points extrêmes $C1,C3$ sont avantageusement situées dans le premier intervalle $[0,15.c,0,85.c]$ et l'ordonnée du troisième point extrême $C1$ est comprise dans le deuxième intervalle $[0,02.\,(^t/_c),0,98.\,(^t/_c)]$.

Chaque profil aérodynamique ainsi déterminé par la méthode selon l'invention permet avantageusement définir et de construire l'enveloppe précédemment décrite, permettant en particulier d'améliorer la pénétration dans le flux d'air de l'enveloppe aérodynamique épaisse pour une pale reculante, le flux d'air circulant alors du bord de fuite vers le bord d'attaque, sans dégrader cette pénétration dans le flux d'air pour une pale avançante.

Par ailleurs, pour chaque profil aérodynamique, les tangences de deux courbes reliées l'une à l'autre à un point caractéristique $Ai$ commun sont de préférence identiques à ce point caractéristique $Ai$ commun afin d'éviter la présence d'une discontinuité de tangence du profil aérodynamique au niveau de ce point caractéristique $Ai$ commun, voire l'apparition d'un point d'inflexion ou de rebroussement sur le profil aérodynamique.

De plus, les tangences du profil aérodynamique au niveau des premier et deuxième points extrêmes $C0,C2$, à savoir le bord d'attaque et le bord de fuite du profil aérodynamique, peuvent être définies parallèles à l'axe des ordonnées V.

En outre, des valeurs optimisées pour les coordonnées $(uCi,vCi)$ des troisième et quatrième points extrêmes $C1,C3$ sont définies en fonction de l'épaisseur relative $^t/_c$ du profil aérodynamique dans le tableau suivant :

| $t/c$ | $uC_1$ | $vC_1$ | $uC_3$ | $vC_3$ |
|---|---|---|---|---|
| 20% | 0,65 | 0,148 | 0,65 | -0,052 |
| 25% | 0,71 | 0,17 | 0,66 | -0,08 |
| 30% | 0,72 | 0,20 | 0,66 | -0,10 |
| 35% | 0,69 | 0,22 | 0,68 | -0,13 |
| 40% | 0,55 | 0,26 | 0,51 | -0,14 |
| 50% | 0,42 | 0,325 | 0,42 | -0,175 |
| 60% | 0,32 | 0,39 | 0,35 | -0,21 |
| 70% | 0,31 | 0,50 | 0,23 | -0,20 |
| 80% | 0,42 | 0,54 | 0,24 | -0,28 |
| 90% | 0,44 | 0,555 | 0,26 | -0,345 |
| 100% | 0,445 | 0,565 | 0,275 | -0,435 |

Ces trois étapes principales peuvent être exécutées de nouveau et de façon itérative jusqu'à converger vers un profil aérodynamique répondant aux objectifs recherchés pour un flux d'air balayant ce profil aérodynamique aussi bien du bord d'attaque vers le bord de fuite que du bord de fuite vers le bord d'attaque, à savoir notamment une finesse maximisée, la génération d'une traînée aérodynamique minimisée et d'un sillage limité.

Ces étapes peuvent être réalisées par un calculateur ou bien un processeur, en appliquant par exemple un algorithme d'optimisation de profils aérodynamique épais.

La méthode selon l'invention peut également comporter des étapes complémentaires.

La méthode selon l'invention peut comporter une première étape complémentaire de simulation permettant de valider chaque profil aérodynamique vis-à-vis de ces objectifs recherchés. Cette simulation numérique est par exemple réalisée grâce à un logiciel de simulation numérique adaptée permettant de simuler le comportement aérodynamique de chaque profil aérodynamique lorsqu'il est balayé par un premier flux d'air du bord d'attaque vers le bord de fuite et par un second flux d'air du bord de fuite vers le bord d'attaque. Selon les résultats de cette simulation, les étapes précédentes peuvent être réalisées une nouvelle fois si besoin. Cette première étape complémentaire de simulation permet également de vérifier l'absence de points d'inflexion et de rebroussement et d'une rétrogradation sur chaque profil aérodynamique.

La méthode selon l'invention peut comporter une deuxième étape complémentaire de définition d'une enveloppe aérodynamique épaisse en combinant des profils aérodynamiques définis lors d'étapes de détermination d'un profil aérodynamique. Cette enveloppe aérodynamique épaisse est alors formée par une succession des profils aérodynamiques épais situés dans des plans parallèles au plan transversal $P_{YZ}$. Ces profils aérodynamiques épais ont des cordes $c$ et des épaisseurs maximales $t$ qui peuvent être différentes ainsi que des épaisseurs relatives $t/c$ qui peuvent être différentes. De préférence, l'épaisseur relative $t/c$ de chaque profil aérodynamique épais est comprise entre 20% et 100%.

La méthode selon l'invention peut également comporter une troisième étape complémentaire d'obtention proprement dite de cette enveloppe aérodynamique épaisse précédemment définie. Au cours de cette troisième étape complémentaire, les profils aérodynamiques épais sont par exemple pris en compte pour la réalisation du moule permettant la fabrication de l'enveloppe aérodynamique épaisse ou bien lors de l'usinage de cette enveloppe aérodynamique épaisse.

En outre, les courbes formant chaque profil aérodynamique doivent être convexes et non-rétrogrades. En effet, la présence d'un point d'inflexion ou d'un point de rebroussement ainsi que d'une rétrogradation dans une ou plusieurs de ces courbes aurait pour conséquence une dégradation plus ou moins importante des performances aérodynamique de ce profil aérodynamique incompatible avec les objectifs recherchés.

Dès lors, les points de contrôle $Bi.j$ doivent être situés dans une zone représentant un troisième intervalle borné vis-à-vis de la position des deux points caractéristiques consécutifs $Ai,Ai+1$ afin d'éviter d'une part la présence de points d'inflexion ou de rebroussement ainsi que d'une rétrogradation et d'autre part des courbures trop extrêmes de chaque courbe, formée par exemple par une courbe de Bézier. Les points de contrôle $Bi.j$ des courbes peuvent ainsi être définis par un troisième intervalle couvrant exactement la zone couverte par les points caractéristiques $Ai,Ai+1$ respectivement sur les axes des abscisses U et des ordonnées V. On définit alors un troisième intervalle [0%,100%] de la zone couverte par les deux points caractéristiques consécutifs $Ai,Ai+1$.

Toutefois, afin d'élargir le champ de recherche des points de contrôle $Bi.j,$ tout en limitant le risque de générer un point d'inflexion et de rebroussement ou bien une rétrogradation, le troisième intervalle est de préférence élargi pour couvrir [-25%,125%] de la zone couverte par les deux points caractéristiques consécutifs Ai,Ai+1. Les points de contrôle Bi.j peuvent ainsi se situer sur une zone sur les axes des abscisses U et des ordonnées V allant 25% de la distance entre ces deux points caractéristiques consécutifs Ai,Ai+1 parallèlement à ces axes des abscisses U et des ordonnées V au-delà de chaque point caractéristique consécutif Ai,Ai+1.

On rappelle que, si chaque courbe est formée par une courbe de Bézier, la tangence d'une courbe de Bézier au niveau d'un premier point caractéristique Ai est définie par une droite reliant le premier point caractéristique Ai au point de contrôle Bi.1 et que la tangence de cette courbe de Bézier au niveau d'un deuxième point caractéristique Ai+1 est définie par une seconde droite reliant le deuxième point caractéristique Ai+1 au point de contrôle Bi.n. De la sorte, les points de contrôle Bi.1,Bi.n permettent notamment d'accentuer l'importance et l'effet d'une tangence au niveau d'un point caractéristiques Ai. Les points de contrôle Bi.1,Bi.n permettent par exemple d'accentuer la zone de plat au niveau des troisième et quatrième points extrêmes C1,C3 et de définir des bords d'attaque et de fuite plus ou moins arrondis.

Dans un exemple de réalisation de la méthode selon l'invention, quatre points caractéristiques A0,A1,A2,A3 sont créés lors de la première étape de première création, ces points caractéristiques A0,A1,A2,A3 étant les quatre points extrêmes C0,C1,C2,C3 prédéterminés, et précédemment évoqués, appartenant au profil aérodynamique épais formant l'enveloppe aérodynamique épaisse.

La détermination d'un profil aérodynamique épais est alors réalisée à partir de quatre courbes, par exemple quatre courbes de Bézier d'ordre (n+1), reliées deux à deux respectivement au niveau d'un point caractéristique Ai commun aux deux courbes de Bézier. Par exemple, les quatre courbes de Bézier sont d'ordre 3, n étant alors égal à 2. Deux points de contrôle Bi.1,Bi.2, sont alors nécessaires et suffisants pour construire chaque courbe de Bézier ayant pour extrémités les points caractéristiques Ai,Ai+1.

On rappelle que les points P(x) formant une telle courbe de Bézier d'ordre 3 sont définis par la relation :

$$P(x) = (1 - x)^3 . A_i + 3.(1 - x)^2 . x . B_{i.1} + 3.(1 - x).x^2 . B_{i.2} + x^3 . A_{i+1},$$

avec x variant de 0 à 1.

Dans ce cas, les tangences du profil aérodynamique au niveau des troisième et quatrième points caractéristiques A1,A3, à savoir les points correspondant à l'épaisseur maximale t du profil aérodynamique, étant parallèles à l'axe des abscisses U, les ordonnées des deux points de contrôle B0.2, B1.1 sont égales à l'ordonnée du troisième point caractéristique A1 et les ordonnées des deux points de contrôle B2.2,B3.1 sont égales à l'ordonnée du quatrième point caractéristique A3.

De plus, les tangences du profil aérodynamique au niveau des premier et deuxième points caractéristiques A0,A2, à savoir le bord d'attaque et le bord de fuite du profil aérodynamique, sont par exemple définies parallèles à l'axe des ordonnées V. En conséquence, les abscisses des deux points de contrôle B3.2,B0.1 sont égales à l'abscisse du premier point caractéristique A0 et les abscisses des deux points de contrôle B1.2,B2.1 sont égales à l'abscisse du deuxième point caractéristique A2.

Par ailleurs, pour chacune des épaisseurs relatives $t/c$ du profil aérodynamique comprises entre 20% et 100% et dans le cas de courbes de Bézier d'ordre 3, des intervalles de variation optimisés bornés par des valeurs basses B et hautes H ont été définis pour les points de contrôle B0.1,B0.2,B1.1,B1.2,B2.1,B2.2, B3.1,B3.2 permettant de définir des profils aérodynamiques répondant aux objectifs recherchés précédemment cités. Pour les points de contrôle Bi.1,...,Bi.j,...,Bi.3, les intervalles de variation correspondent respectivement à des coefficients CuBi.j,CvBi.j de ces points de contrôle Bi.j. Les coefficients CuBi.j,CvBi.j définissent la position des points de contrôle Bi.j par rapport aux deux points caractéristiques consécutifs Ai,Ai+1, chaque coefficient CuBi.j,CvBi.j étant multiplié par la distance entre les deux points caractéristiques consécutifs Ai,Ai+1 parallèlement respectivement aux axes des abscisses U et des ordonnées V afin de définir la position du point de contrôle Bi.j par rapport au point caractéristique Ai parallèlement respectivement aux axes des abscisses U et des ordonnées V et en direction du point caractéristique Ai+1.

Les valeurs basses B et hautes H de ces intervalles de variation optimisés pour les points de contrôle Bi.j sont respectivement listées dans le tableau suivant en fonction de l'épaisseur relative $t/c$ du profil aérodynamique :

| $t/c$ | | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|---|---|---|---|---|---|---|---|---|---|
| 20% | B | 0,80 | 0,10 | 0,30 | -0.10 | 0,50 | 0 | 0,65 | 0 |
| | H | 0,90 | 0,25 | 0,40 | 0,10 | 0.90 | 0,05 | 0,85 | 0,15 |
| 25% | B | 0,80 | 0,30 | 0,80 | 0,30 | 0,40 | 0,20 | 0,80 | 0,50 |
| | H | 0,90 | 0,50 | 0,85 | 0,60 | 0,80 | 0,30 | 0,90 | 0,80 |

(suite)

| t/c | | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|-----|---|------|------|------|-------|------|------|------|------|
| 30% | B | 0,35 | 0,10 | 0,40 | 0,05 | 0,35 | 0,20 | 0,80 | 0,50 |
| | H | 0,45 | 0,20 | 0,50 | 0,25 | 0,70 | 0,30 | 0,90 | 0,65 |
| 35% | B | 0,74 | 0,34 | 0,60 | 0,22 | 0,25 | 0,15 | 0,80 | 0,50 |
| | H | 0,88 | 0,70 | 0,70 | 0,32 | 0,50 | 0,30 | 0,90 | 0,65 |
| 40% | B | 0,85 | 0,35 | 0,65 | 0,12 | 0,77 | 0,45 | 0,70 | 0,37 |
| | H | 1,10 | 0,52 | 0,86 | 0,24 | 1,10 | 0,65 | 0,95 | 0,65 |
| 50% | B | 0,70 | 0,15 | 0,67 | 0,05 | 0,81 | 0,39 | 0,77 | 0,41 |
| | H | 0,90 | 0,30 | 0,86 | 0,14 | 1,00 | 0,63 | 0,98 | 0,61 |
| 60% | B | 0,60 | 0,10 | 0,70 | 0,05 | 0,70 | 0,25 | 0,15 | 0,00 |
| | H | 0,80 | 0,20 | 0,85 | 0,12 | 0,80 | 0,35 | 0,35 | 0,15 |
| 70% | B | 0,75 | 0,08 | 0,65 | -0,03 | 0,70 | 0,25 | 0,22 | -,05 |
| | H | 0,90 | 0,16 | 0,90 | 0,05 | 0,80 | 0,35 | 0,45 | 0,15 |
| 80% | B | 0,85 | 0,20 | 0,65 | -0,04 | 0,60 | 0,30 | 0,80 | 0,57 |
| | H | 1,05 | 0,35 | 0,92 | 0,05 | 0,90 | 0,50 | 0,90 | 0,85 |
| 90% | B | 0,80 | 0,15 | 0,71 | -0,03 | 0,65 | 0,43 | 0,79 | 0,57 |
| | H | 0,98 | 0,28 | 0,93 | 0,15 | 0,93 | 0,60 | 0,94 | 0,81 |
| 100% | B | 0,75 | 0,10 | 0,75 | 0,00 | 0,65 | 0,50 | 0,77 | 0,60 |
| | H | 0,95 | 0,25 | 0,95 | 0,25 | 1,00 | 0,70 | 0,97 | 0,80 |

Des valeurs optimisées pour les coefficients *CuBi.j,CvBi.j* des points de contrôle *B0.1,B0.2,B1.1,B1.2,B2.1,B2.2, B3.1,B3.2* ont également été définies en fonction de l'épaisseur relative $^t/_c$ et sont listées dans le tableau suivant :

| t/c | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|-----|------|------|------|-------|------|------|------|------|
| 20% | 0,85 | 0,22 | 0,37 | 0 | 0,60 | 0 | 0,70 | 0,10 |
| 25% | 0,85 | 0,42 | 0,81 | 0,42 | 0,50 | 0,22 | 0,85 | 0,69 |
| 30% | 0,38 | 0,13 | 0,44 | 0,16 | 0,49 | 0,24 | 0,85 | 0,65 |
| 35% | 0,81 | 0,44 | 0,66 | 0,24 | 0,34 | 0,22 | 0,85 | 0,65 |
| 40% | 0,97 | 0,45 | 0,76 | 0,20 | 0,91 | 0,54 | 0,85 | 0,54 |
| 50% | 0,83 | 0,21 | 0,76 | 0,07 | 0,93 | 0,56 | 0,88 | 0,54 |
| 60% | 0,75 | 0,15 | 0,80 | 0,05 | 0,75 | 0,29 | 0,25 | 0,10 |
| 70% | 0,85 | 0,11 | 0,71 | -0,01 | 0,75 | 0,29 | 0,40 | 0 |
| 80% | 0,95 | 0,27 | 0,75 | 0 | 0,73 | 0,45 | 0,85 | 0,69 |
| 90% | 0,86 | 0,21 | 0,81 | 0,09 | 0,78 | 0,53 | 0,88 | 0,69 |
| 100% | 0,82 | 0,16 | 0,83 | 0,16 | 0,78 | 0,57 | 0,89 | 0,69 |

En outre, des profils aérodynamiques épais intermédiaires ayant une épaisseur relative $^t/_c$ intermédiaire comprise entre deux épaisseurs relatives inférieure $(^t/_c)_{min}$ et supérieure $(^t/_c)_{max}$ fournies dans un de ces tableaux peuvent être obtenus par interpolations de deux profils aérodynamiques épais correspondant aux épaisseurs relatives inférieure $(^t/_c)_{min}$ et supérieure $(^t/_c)_{max}$. Il ne s'agit donc pas dans ce cas de profils aérodynamiques épais optimisés à proprement parlé car ils ne sont pas le résultat d'un processus d'optimisation, mais le résultat d'une interpolation de deux profils aérodynamiques épais optimisés.

Toutefois, de tels profils aérodynamiques épais intermédiaires permettent avantageusement de se rapprocher, voire d'atteindre les objectifs recherchés, sans avoir à dérouler un processus d'optimisation.

Les coordonnées $(u,v)$ de chaque point formant un profil aérodynamique épais intermédiaire sont définies par interpolation, telle une interpolation polynomiale, à partir d'un premier profil aérodynamique ayant une épaisseur relative inférieure $(t/c)_{\min}$ et d'un second profil aérodynamique ayant une épaisseur relative supérieure $(t/c)_{\max}$ construits par exemple à partir d'un de ces tableaux. L'ordonnée $v$ de chaque point du profil aérodynamique épais intermédiaire ayant l'épaisseur relative $t/c$ est déterminée par exemple par la relation d'interpolation linéaire suivante :

$$v = \frac{(t/c)-(t/c)_{\min}}{(t/c)_{\max}-(t/c)_{\min}} v_{max} + \left(1 - \frac{(t/c)-(t/c)_{\min}}{(t/c)_{\max}-(t/c)_{\min}}\right) v_{min},$$

$v_{min}$ étant une première ordonnée du point du premier profil aérodynamique ayant la même abscisse $u$ que le point de coordonnées $(u,v)$ du profil aérodynamique épais intermédiaire, et $v_{max}$ étant une deuxième ordonnée du point du deuxième profil aérodynamique ayant la même abscisse $u$ que le point de coordonnées $(u,v)$ du profil aérodynamique épais intermédiaire.

L'invention et ses avantages apparaîtront avec plus de détails dans le cadre de la description qui suit avec des exemples de réalisation donnés à titre illustratif en référence aux figures annexées qui représentent :

- la figure 1, un aéronef muni d'un rotor,
- la figure 2, une vue partielle d'un rotor,
- les figures 3 et 4, deux vues partielles en perspective d'un manchon et d'une pale,
- la figure 5, vue partielle en perspective d'une pale,
- la figure 6, un schéma synoptique d'une méthode d'obtention d'une enveloppe aérodynamique épaisse,
- les figures 7 à 17, des profils aérodynamiques d'enveloppes aérodynamiques épaisses, et
- les figures 18 à 21, des courbes de variations des coordonnées de points extrêmes des profils aérodynamiques d'enveloppes aérodynamiques épaisses.

Les éléments présents dans plusieurs figures distinctes sont affectés d'une seule et même référence.

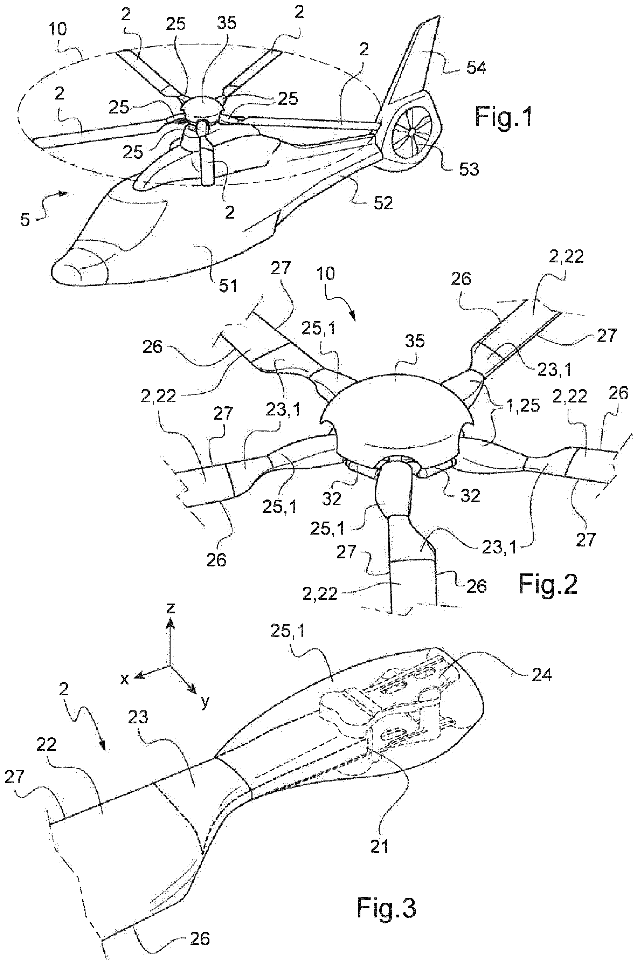

La figure 1 représente un aéronef à voilure tournante 5 comportant un fuselage 51, un rotor principal 10 de sustentation et une poutre de queue 52 supportant un rotor arrière 53 anticouple en lacet et un empennage vertical 54. Le rotor principal 10 comporte un moyeu 3 tournant, cinq pales 2 et cinq manchons 25 ainsi qu'une coupole 35 et des amortisseurs 32 interpales. La coupole 35 assure une protection et un carénage de la tête du rotor principal 10.

La figure 2 représente la partie centrale du rotor principal 10, l'extrémité libre de chaque pale 2 étant tronquée. Pour chaque pale 2, le pied de pale 21, un col de pale 23 et partiellement la partie profilée 22 de la pale 2 ainsi que le manchon 25 sont visibles. La partie profilée 22 de chaque pale 2 est formée par des profils aérodynamiques minces comportant un bord de fuite 26 effilé et permet d'assurer l'essentiel des performances aérodynamique de la pale 2 et en particulier la portance de la pale 2. Le col de pale 23 relie le pied de pale 21 à la partie profilée 22. Le col de pale 23 de chaque pale 2 et chaque manchon 25 sont formés par une enveloppe aérodynamique épaisse 1.

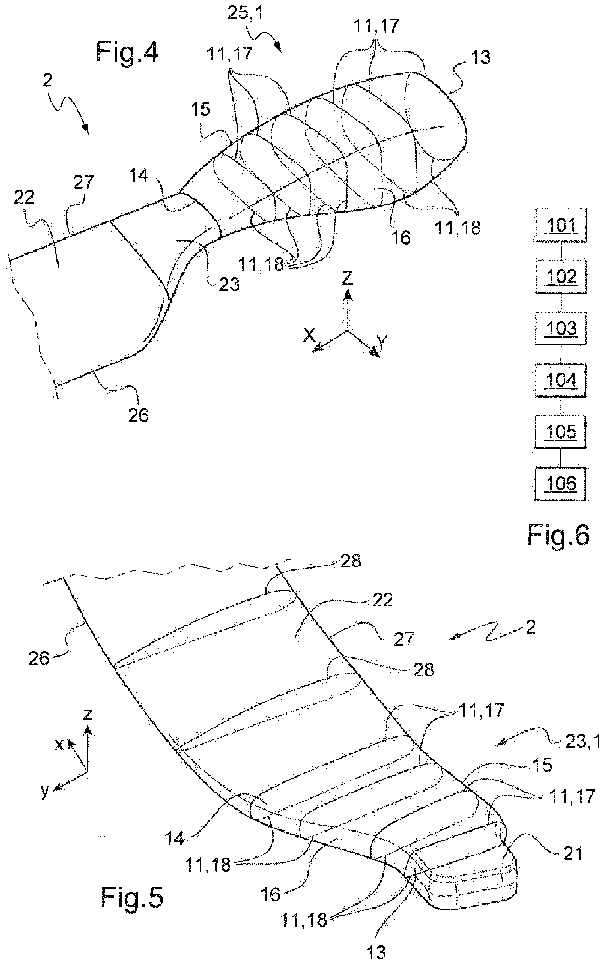

Chaque manchon 25 assure le carénage aérodynamique d'un dispositif structurel de jonction 24 reliant une pale 2, et plus précisément le pied de pale 21, au moyeu 3 du rotor principal 10 comme représenté sur la figure 3. Chaque manchon 25 est formé par une enveloppe aérodynamique épaisse 1 représentée en perspective sur les figures 3 et 4 avec une partie de la pale 2. Sur les figures 3 et 4, le col de pale 23 est selon l'art antérieur.

La figure 5 représente en partie une pale 2 comportant un col de pale 23 formé par une enveloppe aérodynamique épaisse 1.

Selon les figures 4 et 5, chaque pale 2 et chaque enveloppe aérodynamique épaisse 1 s'étendent en envergure selon une direction longitudinale X d'une première zone extrémale 13 à une seconde zone extrémale 14. Une direction transversale Y est perpendiculaire à la direction longitudinale X et une direction d'élévation Z est définie perpendiculairement aux directions longitudinale X et transversale Y afin de former un repère orthogonal direct (X,Y,Z). Un plan transversal $P_{YZ}$ perpendiculaire à la direction longitudinale X est également défini par les directions transversale Y et d'élévation Z.

Chaque pale 2 et chaque enveloppe aérodynamique épaisse 1 s'étendent également selon la direction transversale Y d'un bord d'attaque 27,15 vers un bord de fuite 26,16. Chaque pale 2 et chaque enveloppe aérodynamique épaisse 1 sont formées par une succession de profils aérodynamiques 28,11 situés dans des plans parallèles au plan transversal $P_{YZ}$. Pour la partie profilée 22 de chaque pale 2, les profils aérodynamiques 28 sont minces et comportent un bord d'attaque 27 et un bord de fuite 26. Pour l'enveloppe aérodynamique épaisse 1, qu'elle constitue le col de pale 23 selon la figure 5 ou bien le manchon 25 selon la figure 4, chaque profil aérodynamique 11 est épais et comporte un bord d'attaque 15 et un bord de fuite 16 ainsi qu'un profil d'extrados 17 et un profil d'intrados 18. Chaque profil aérodynamique 11 épais est défini par une corde $c$ entre le bord d'attaque 15 et le bord de fuite 16, une épaisseur $t$ égale à une distance maximale entre le profil d'extrados 17 et le profil d'intrados 18 mesurée perpendiculairement à la corde $c$ et une épaisseur relative $t/_c$ égale au rapport de l'épaisseur maximale $t$ par la corde $c$.

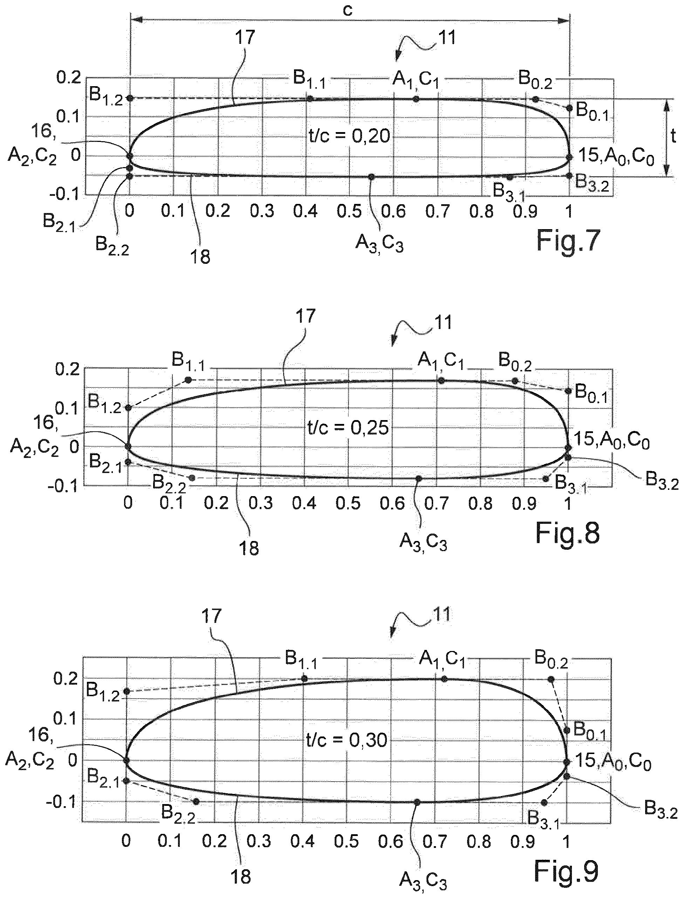

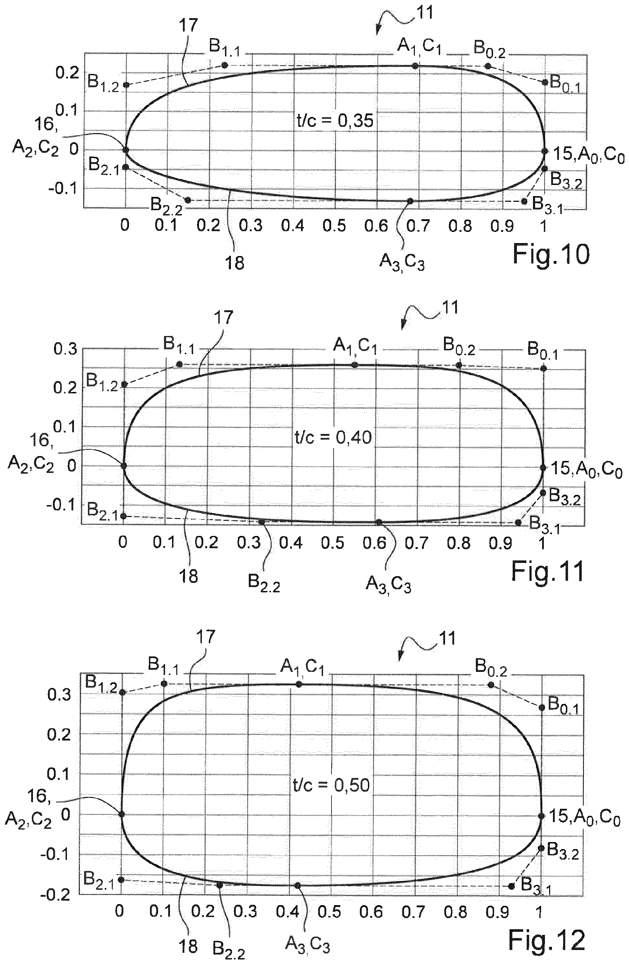

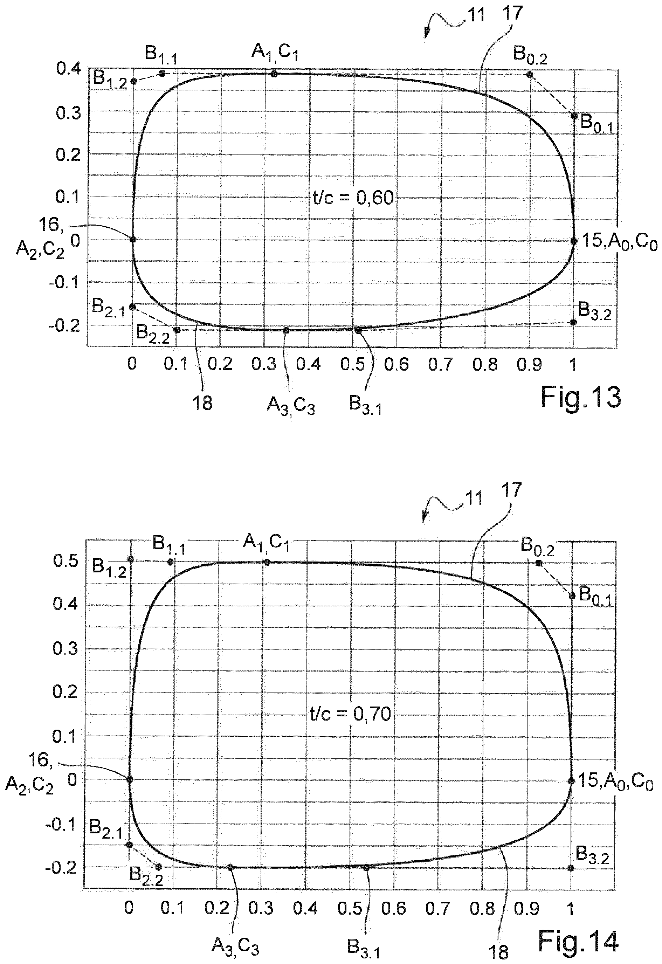

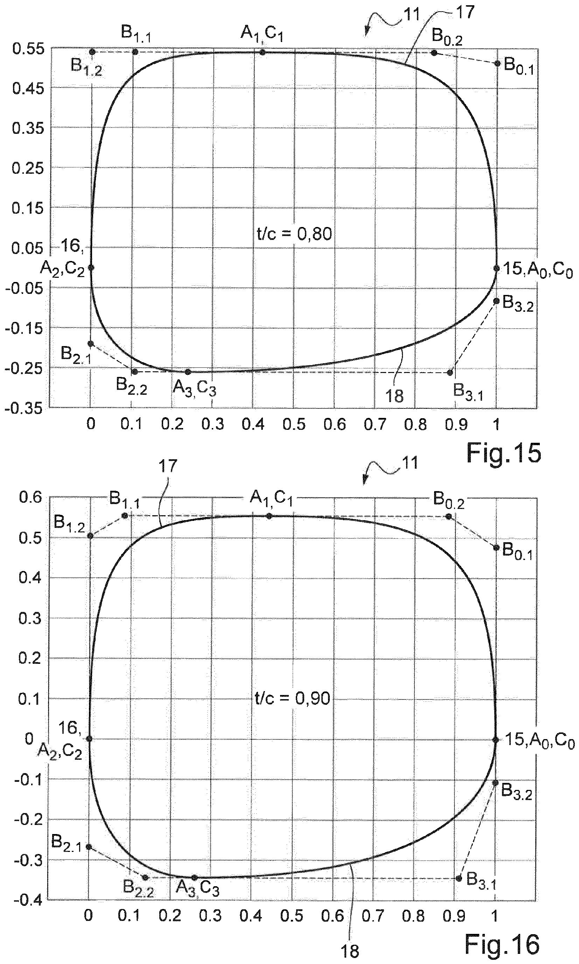

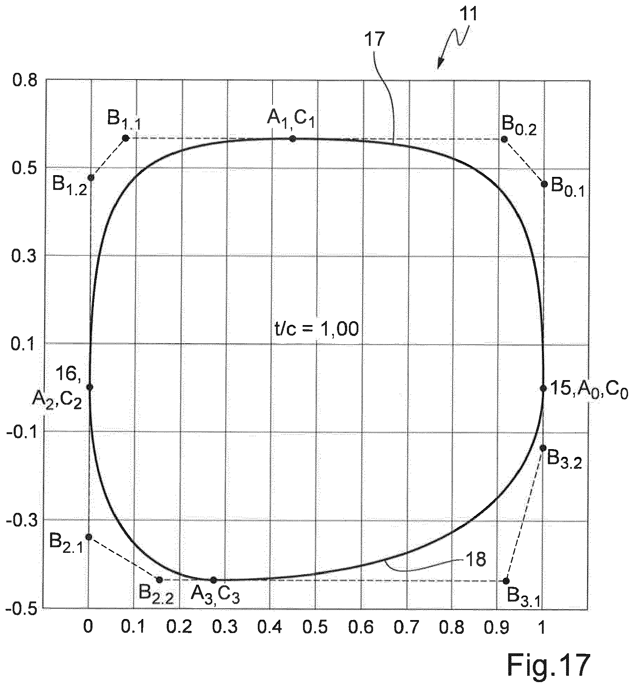

Des profils aérodynamiques 11 épais susceptibles de former une enveloppe aérodynamique épaisse 1 destinée à constituer aussi bien un manchon 25 qu'un col de pale 23 sont représentés sur les figures 7 à 17, en fonction de leur épaisseur relative $t/_c$. L'épaisseur relative $t/_c$ de ces profils aérodynamiques 11 est comprise entre 20% et 100%. Sur les figures 4 et 5, les profils aérodynamiques 11 utilisés pour former l'enveloppe aérodynamique épaisse 1 constituant le manchon 25 ont globalement une épaisseur relative $t/_c$ plus importante que les profils aérodynamiques 11 utilisés pour former l'enveloppe aérodynamique épaisse 1 constituant le col de pale 23.

Les positions radiales des profils aérodynamiques 11 formant une telle enveloppe aérodynamique épaisse 1 constituant un col de pale 23 ou un manchon 25 sont par exemple comprises entre 3% et 25% de l'envergure de la pale 2 correspondant également au rayon du rotor principal 10. Cette position radiale est définie par rapport au centre de rotation du rotor principal 10.

De façon commune, chacun de ces profils aérodynamiques 11 épais passe par des points extrêmes $C0, C1, C2, C3$ définis dans un repère $(U,V)$ défini par un axe des abscisses U formé par la direction de la corde $c$ et un axe des ordonnées V perpendiculaire à l'axe des abscisses U. Une unité des axes des abscisses U et des ordonnées V est égale à la corde $c$. On comprend ainsi que la corde $c$ de chaque profil aérodynamique est unitaire dans le repère $(U,V)$.

Un premier point extrême $C0$ de coordonnées (1,0) est situé au niveau du bord d'attaque 15, un deuxième point extrême $C2$ de coordonnées (0,0) est situé au niveau du bord de fuite 16 et les deux troisième et quatrième points extrêmes $C1, C3$ forme l'épaisseur maximale $t$ du profil aérodynamique 11. De plus, les tangences de chaque profil aérodynamique 11 au niveau des premier et deuxième point extrême $C0, C2$ sont définies parallèles à l'axe des ordonnées V alors que les tangences au niveau des troisième et quatrième points extrêmes $C1, C3$ sont définies parallèles à l'axe des abscisses U.

Par ailleurs, la position des troisième et quatrième points extrêmes $C1, C3$ dans le repère $(U,V)$ sont contraints afin d'améliorer la pénétration dans le flux d'air de l'enveloppe aérodynamique épaisse 1 pour une pale 2 reculante, sans dégrader cette pénétration dans le flux d'air pour une pale 2 avançante. En conséquence, cette enveloppe aérodynamique épaisse 1 est avantageusement adaptée à des conditions d'écoulements très différentes correspondant aux différentes positions en azimut des pales 2 lors d'un tour du rotor principal 10.

Les abscisses des troisième et quatrième points extrêmes $C1, C3$ sont notamment comprises dans un premier intervalle $[0,15.c, 0,85.c]$ et l'ordonnée du troisième point extrême $C1$ est comprise dans un deuxième intervalle $[0,02.(t/_c), 0,98.(t/_c)]$. Plus précisément, les coordonnées $(uCi, vCi)$ des troisième et quatrième points extrêmes $C1, C3$ dans le repère $(U,V)$ sont définis en fonction de l'épaisseur relative $t/_c$ et situées dans des intervalles de variation bornés par des valeurs basses B et hautes H selon le tableau suivant :

| $t/c$ | | $uC_1$ | $vC_1$ | $uC_3$ | $vC_3$ |
|---|---|---|---|---|---|
| 20% | B | 0,55 | 0,12 | 0,55 | -0,08 |
| | H | 0,70 | 0,16 | 0,75 | -0,04 |
| 25% | B | 0,63 | 0,14 | 0,55 | -0,11 |
| | H | 0,73 | 0,19 | 0,75 | -0,06 |
| 30% | B | 0,65 | 0,18 | 0,62 | -0,12 |
| | H | 0,75 | 0,22 | 0,72 | -0,08 |
| 35% | B | 0,65 | 0,20 | 0,62 | -0,15 |
| | H | 0,75 | 0,24 | 0,73 | -0,11 |
| 40% | B | 0,48 | 0,23 | 0,45 | -0,17 |
| | H | 0,63 | 0,28 | 0,65 | -0,12 |
| 50% | B | 0,35 | 0,28 | 0,37 | -0,22 |
| | H | 0,49 | 0,37 | 0,57 | -0,13 |
| 60% | B | 0,25 | 0,34 | 0,30 | -0,26 |
| | H | 0,42 | 0,45 | 0,50 | -0,15 |

(suite)

| t/c | | $uC_1$ | $vC_1$ | $uC_3$ | $vC_3$ |
|---|---|---|---|---|---|
| 70% | B | 0,20 | 0,44 | 0,20 | -0,26 |
| | H | 0,40 | 0,56 | 0,30 | -0,14 |
| 80% | B | 0,36 | 0,47 | 0,19 | -0,33 |
| | H | 0,52 | 0,57 | 0,31 | -0,23 |
| 90% | B | 0,37 | 0,47 | 0,20 | -0,43 |
| | H | 0,52 | 0,59 | 0,30 | -0,31 |
| 100% | B | 0,40 | 0,45 | 0,22 | -0,55 |
| | H | 0,50 | 0,60 | 0,32 | -0,40 |

Chaque profil aérodynamique 11 épais ainsi défini permet avantageusement d'améliorer le comportement aérodynamique de ce profil aérodynamique 11 épais en limitant les décollements du flux d'air le balayant aussi bien du bord d'attaque 15 vers le bord de fuite 16 que du bord de fuite 16 vers le bord d'attaque 15. En conséquence, la traînée aérodynamique de chaque profil aérodynamique 11 épais est minimisée, en particulier pour un flux d'air le balayant du bord de fuite 16 vers le bord d'attaque 15, notamment en supprimant des pics de trainée aérodynamique apparaissant traditionnellement au niveau des profils aérodynamiques épais. De plus, la production d'un sillage par chaque profil aérodynamique 11 épais est réduite tout en permettant l'apparition d'une portance. De plus, la finesse aérodynamique de chaque profil aérodynamique 11 épais est maximisée pour un flux d'air le balayant du bord d'attaque 15 vers le bord de fuite 16.

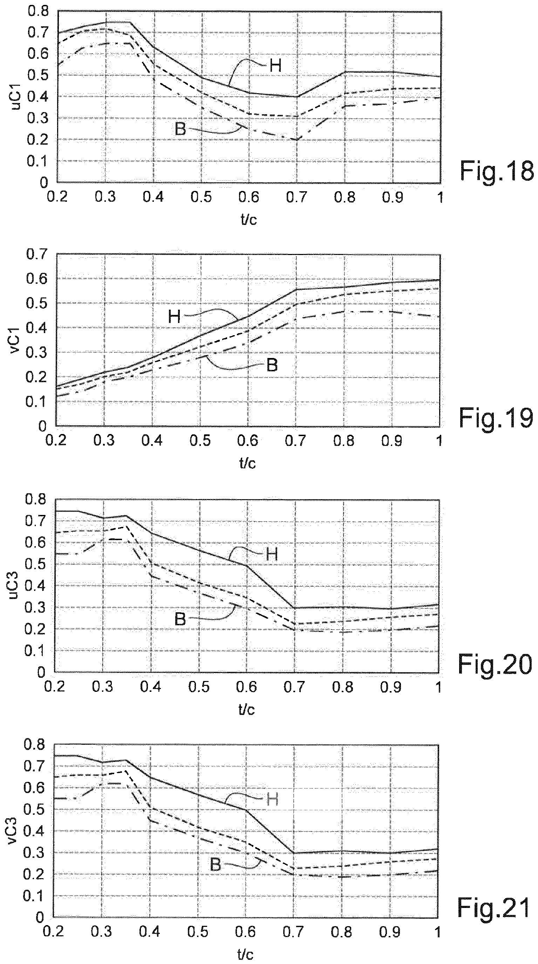

Des représentations graphiques des limites basse B et haute H pour respectivement les coordonnées $uCi,vCi$ de ces troisième et quatrième points extrêmes $C1,C3$ sont également représentés sur les figures 18 à 21 en fonction de l'épaisseur relative $t/_c$ du profil aérodynamique 11. Une courbe correspondant à des valeurs optimisées respectivement de ces coordonnées $uCi,vCi$ des troisième et quatrième points extrêmes $C1,C3$ est également représentée sur les figures 18 à 21. Ces valeurs optimisées des coordonnées $uCi,vCi$ des troisième et quatrième points extrêmes $C1,C3$ sont définies dans le tableau suivant :

| t/c | $uC_1$ | $vC_1$ | $uC_3$ | $vC_3$ |
|---|---|---|---|---|
| 20% | 0,65 | 0,148 | 0,65 | -0,052 |
| 25% | 0,71 | 0,17 | 0,66 | -0,08 |
| 30% | 0,72 | 0,20 | 0,66 | -0,10 |
| 35% | 0,69 | 0,22 | 0,68 | -0,13 |
| 40% | 0,55 | 0,26 | 0,51 | -0,14 |
| 50% | 0,42 | 0,325 | 0,42 | -0,175 |
| 60% | 0,32 | 0,39 | 0,35 | -0,21 |
| 70% | 0,31 | 0,50 | 0,23 | -0,20 |
| 80% | 0,42 | 0,54 | 0,24 | -0,28 |
| 90% | 0,44 | 0,555 | 0,26 | -0,345 |
| 100% | 0,445 | 0,565 | 0,275 | -0,435 |

Ces profils aérodynamiques 11 épais peuvent être obtenus par une méthode d'obtention d'une enveloppe aérodynamique épaisse 1 dont un schéma synoptique est représenté sur la figure 6. Cette méthode d'obtention d'une enveloppe aérodynamique épaisse 1 comporte trois étapes principales 101,102,103 et des étapes complémentaires 104,105,106 permettant d'une part déterminer chaque profil aérodynamique 11 de l'enveloppe aérodynamique épaisse 1, les étapes complémentaires 104,105,106 étant alors optionnelles, et d'autre part de fabriquer une enveloppe aérodynamique épaisse 1.

Selon une première étape de première création 101 de points caractéristiques $Ai$ appartenant au profil aérodynamique 11, chaque point caractéristique *Ai* est défini dans le repère (U,V) Dans le cadre des profils aérodynamiques représentés sur les figures 7 à 17, quatre points caractéristiques *A0,A1,A2,A3* correspondant respectivement aux points extrêmes *C0,C1,C2,C3* sont créés lors de cette première étape de première création 101.

Selon une deuxième étape de deuxième création 102 de points de contrôle *Bi.j*, *i* étant un entier positif variant de 0 à m, *(m+1)* étant le nombre de points caractéristiques *Ai* utilisés, *j* étant un entier positif variant de 1 à *n*, *n* étant un entier positif supérieur ou égal à 1, les points de contrôle *Bi.j* sont des points de construction du profil aérodynamique 11 entre deux points caractéristiques consécutifs *Ai,Ai+1*, *(i+1)* étant remplacé par la valeur nulle « 0 » lorsque *i* est égal à *m*.

Dans le cadre des profils aérodynamiques représentés sur les figures 7 à 17, quatre points caractéristiques *A0,A1,A2,A3* ayant été créés lors de la première étape de première création 101, l'entier positif *i* varie de 0 à 3. De plus, deux points de contrôle *Bi.1, Bi.2,* sont créés pour chaque point caractéristique *Ai* lors de la deuxième étape de deuxième création 102.

Ensuite, selon une troisième étape de détermination 103 du profil aérodynamique 11, *(m+1)* courbes, par exemple *(m+1)* courbes de Bézier 41-44 d'ordre *n+1*, sont construites à partir des points caractéristiques *Ai* et des points de contrôle *Bi.j* afin de relier respectivement deux points caractéristiques consécutifs *Ai,Ai+1* et de former ainsi le profil aérodynamique 11.

Dans le cadre des profils aérodynamiques représentés sur les figures 7 à 17, deux points de contrôle *Bi.1, Bi.2,* ayant été créés pour chaque point caractéristique *Ai* lors de la deuxième étape de deuxième création 102, quatre courbes de Bézier 41-44 d'ordre 3 sont construites lors de la troisième étape de détermination 103.

La méthode d'obtention d'une enveloppe aérodynamique épaisse 1 peut également comporter une première étape complémentaire de simulation 104 permettant de simuler le comportement aérodynamique du profil aérodynamique 11 lorsqu'il est balayé par un premier flux d'air du bord d'attaque 15 vers le bord de fuite 16 et par un second flux d'air du bord de fuite 16 vers le bord d'attaque 15. Le profil aérodynamique 11 épais déterminé précédemment peut alors être validé lors de cette première étape complémentaire de simulation 104 ou bien une nouvelle itération des étapes principales 101,102,103 de la méthode est réalisée.

La méthode d'obtention d'une enveloppe aérodynamique épaisse 1 peut également comporter une deuxième étape complémentaire de définition 105 de l'enveloppe aérodynamique épaisse 1 en combinant des profils aérodynamiques 11 définis lors de la troisième étape de détermination 103 du profil aérodynamique 11.

La méthode d'obtention d'une enveloppe aérodynamique épaisse 1 peut ensuite comporter une troisième étape complémentaire d'obtention 106 proprement dite de l'enveloppe aérodynamique épaisse 1, cette enveloppe aérodynamique épaisse 1 étant ainsi formée par les profils aérodynamiques 11 épais précédemment déterminés lors de la troisième étape de détermination 103. Les profils aérodynamiques épais sont par exemple utilisés pour la réalisation du moule permettant la fabrication de l'enveloppe aérodynamique épaisse 1 ou bien lors de l'usinage de cette enveloppe aérodynamique épaisse 1. De la sorte, une telle enveloppe aérodynamique épaisse 1 peut être utilisée comme col de pale 23 ou bien comme manchon 25 et agencée entre le moyeu 3 tournant d'un rotor principal 10 d'un aéronef 5 et chaque pale 2 de ce rotor principal 10.

Les figures 7 à 17 représentent des exemples de profils aérodynamiques 11 épais définis par cette méthode d'obtention d'une enveloppe aérodynamique épaisse 1 pour des épaisseurs relatives $^t/_c$ comprises entre 20% et 100%. Les quatre courbes de Bézier 41-44 sont d'ordre 3. De plus, chaque point de contrôle *Bi.j* est situé dans une zone représentant un troisième intervalle [-25%,125%] d'une zone couverte par les deux points caractéristiques consécutifs *Ai,Ai+1* de sorte à éviter des courbures trop extrêmes pour chaque profil aérodynamique 11 ainsi que l'apparition de points d'inflexion et de rebroussement sur le profil aérodynamique 11 lors de la détermination 103 du profil aérodynamique 11.

Les valeurs des points caractéristiques *A0,A1,A2,A3* et des points de contrôle *B0.1,B0.2,B1.1,B1.2,B2.1,B2.2,B3.1,B3.2* permettant de définir les courbes de Bézier 41-44 d'ordre 3 et, par suite, de construire chacun de ces profils aérodynamiques 11 sont définies en fonction de l'épaisseur relative $^t/_c$ du profil aérodynamique 11. Les points de contrôle *Bi.j* sont définis par des coefficients *CuBi.j,CvBi.j* définissant leur position par rapport aux deux points caractéristiques consécutifs *Ai,Ai+1*. Chaque coefficient *CuBi.j,CvBi.j* est multiplié par la distance entre les deux points caractéristiques *Ai,Ai+1* parallèlement respectivement aux axes des abscisses U et des ordonnées V afin de définir la position du point de contrôle *Bi.j* par rapport au point caractéristique *Ai* parallèlement respectivement à ces axes des abscisses U et des ordonnées V.

Les figures 7 à 17 représentent des exemples de profils aérodynamiques épais 11 définis pour chacune des épaisseurs relatives $^t/_c$ fournies par le tableau suivant.

| t/c | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|-----|------|------|------|------|------|------|------|------|
| 20% | 0,85 | 0,22 | 0,37 | 0 | 0,60 | 0 | 0,70 | 0,10 |

(suite)

| $t/c$ | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|---|---|---|---|---|---|---|---|---|
| 25% | 0,85 | 0,42 | 0,81 | 0,42 | 0,50 | 0,22 | 0,85 | 0,69 |
| 30% | 0,38 | 0,13 | 0,44 | 0,16 | 0,49 | 0,24 | 0,85 | 0,65 |
| 35% | 0,81 | 0,44 | 0,66 | 0,24 | 0,34 | 0,22 | 0,85 | 0,65 |
| 40% | 0,97 | 0,45 | 0,76 | 0,20 | 0,91 | 0,54 | 0,85 | 0,54 |
| 50% | 0,83 | 0,21 | 0,76 | 0,07 | 0,93 | 0,56 | 0,88 | 0,54 |
| 60% | 0,75 | 0,15 | 0,80 | 0,05 | 0,75 | 0,29 | 0,25 | 0,10 |
| 70% | 0,85 | 0,11 | 0,71 | -0,01 | 0,75 | 0,29 | 0,40 | 0 |
| 80% | 0,95 | 0,27 | 0,75 | 0 | 0,73 | 0,45 | 0,85 | 0,69 |
| 90% | 0,86 | 0,21 | 0,81 | 0,09 | 0,78 | 0,53 | 0,88 | 0,69 |
| 100% | 0,82 | 0,16 | 0,83 | 0,16 | 0,78 | 0,57 | 0,89 | 0,69 |

Les profils aérodynamiques 11 épais obtenus présentent, qu'elle que soit leur épaisseur relative $t/c$, au niveau du bord d'attaque 15 un front très marqué sur le profil d'extrados 17 et une forme élancée sur le profil d'intrados 18. Les profils d'extrados 17 et d'intrados 18 sont plus arrondis au niveau du bord de fuite 16 compte tenu des objectifs de minimisation de la trainée aérodynamique en pale reculante.

De la sorte, chaque profil aérodynamique 11 épais possède un comportement aérodynamique optimisé en limitant les décollements du flux d'air le balayant. En particulier, la trainée aérodynamique de chaque profil aérodynamique 11 épais est minimisée pour un flux d'air le balayant du bord de fuite 16 vers le bord d'attaque 15 et sa finesse aérodynamique est maximisée pour un flux d'air le balayant du bord d'attaque 15 vers le bord de fuite 16, tout en permettant l'apparition d'une portance sur ce profil aérodynamique 11 épais.

Notamment, la finesse de chaque profil aérodynamique 11 épais est maximisée par exemple avec un angle d'incidence positif compris entre 8 et 12 degrés. De même, sa trainée aérodynamique est minimisée par exemple avec un angle d'incidence positif compris entre 168 et 174 degrés.

Par ailleurs, des profils aérodynamiques 11 épais intermédiaires ayant une épaisseur relative $t/c$ intermédiaire, non fournie dans les tableaux précédents, peuvent être obtenus par interpolations de deux profils aérodynamiques épais fournies dans les tableaux dont les d'épaisseurs relatives inférieure $(t/c)_{min}$ et supérieure $(t/c)_{max}$ encadrent cette épaisseur relative $t/c$ intermédiaire. Les coordonnées $(u,v)$ de chaque point de ce profil aérodynamique 11 épais intermédiaire sont définies à partir des points $(u, v_{min})$ et $(u, v_{max})$ des deux profils aérodynamiques 11 épais ayant respectivement une épaisseur relative inférieure $(t/c)_{min}$ et une épaisseur relative supérieure $(t/c)_{max}$. L'ordonnée $v$ de chaque point $(u,v)$ du profil aérodynamique 11 épais intermédiaire est déterminée par interpolation en fonction des ordonnées $v_{min}, v_{max}$ des points $(u, v_{min})$ et $(u, v_{max})$ de ces profils aérodynamiques 11 épais construits à partir des tableaux précédents, par exemple par la relation :

$$ v = \frac{(t/c)-(t/c)_{\min}}{(t/c)_{\max}-(t/c)_{\min}} v_{max} + \left( 1 - \frac{(t/c)-(t/c)_{\min}}{(t/c)_{\max}-(t/c)_{\min}} \right) v_{min}, $$

$v_{min}$ étant une première ordonnée du point du premier profil aérodynamique ayant la même abscisse $u$ que le point de coordonnées $(u,v)$ du profil aérodynamique épais intermédiaire, et $v_{max}$ étant une deuxième ordonnée du point du deuxième profil aérodynamique ayant la même abscisse $u$ que le point de coordonnées $(u,v)$ du profil aérodynamique épais intermédiaire.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

Un rotor principal 10 peut notamment comporter des manchons 25 constitués respectivement par une enveloppe aérodynamique épaisse 1 selon l'invention tels que représentés sur la figure 3, les cols de pales 23 étant selon l'art antérieur. Un rotor principal 10 peut aussi comporter des cols de pales 23 constitués respectivement par une enveloppe aérodynamique épaisse 1 tels que représentés sur la figure 4, les manchons 25 pouvant alors être selon l'art antérieur.

Un rotor principal 10 peut également comporter simultanément des manchons 25 et des cols de pales 23 constitués respectivement par une enveloppe aérodynamique épaisse 1 selon l'invention comme représenté sur la figure 2.

Par ailleurs, une enveloppe aérodynamique épaisse 1 selon l'invention peut former un manchon 25 et/ou un col de pale 23 d'un rotor principal 10 de sustentation, comme précédemment décrit sur les figures, mais également un manchon 25 et/ou un col de pale 23 d'un rotor arrière anticouple ou bien d'une hélice propulsive d'un aéronef.

## Revendications

**1.** Enveloppe aérodynamique épaisse (1) destinée à être agencée entre un moyeu (3) tournant d'un rotor (10) d'un aéronef (5) et une partie profilée (22) d'une pale (2) dudit rotor (10), ladite enveloppe aérodynamique épaisse (1) s'étendant d'une part selon une direction longitudinale (X) en envergure d'une première zone extrémale (13) vers une seconde zone extrémale (14) et d'autre part selon une direction transversale (Y) d'un bord d'attaque (15) vers un bord de fuite (16), ladite enveloppe aérodynamique épaisse (1) étant formée par une succession de profils aérodynamiques (11) épais situés dans des plans parallèles à un plan transversal ($P_{YZ}$) perpendiculaire à ladite direction longitudinale (X) en envergure, chaque profil aérodynamique (11) épais comportant un profil d'extrados (17) et un profil d'intrados (18), chaque profil aérodynamique (11) épais étant défini par une corde c entre ledit bord d'attaque (15) et ledit bord de fuite (16), une épaisseur t égale à une distance maximale entre ledit profil d'extrados (17) et ledit profil d'intrados (18) mesurée perpendiculairement à ladite corde *c* et une épaisseur relative $^t/_c$ égale au rapport de ladite épaisseur maximale *t* par ladite corde *c*, ladite épaisseur relative $^t/_c$ étant supérieure ou égale à 20% pour chaque profil aérodynamique (11) épais, chaque profil aérodynamique (11) passant par des points extrêmes (*C0,C1,C2,C3*), chaque point extrême (*C0,C1,C2,C3*) étant défini dans un repère (U,V) attaché audit profil aérodynamique (11) et défini par un axe des abscisses (U) formé par la direction de ladite corde *c* et un axe des ordonnées (V) perpendiculaire audit axe des abscisses (U), une unité desdits axes des abscisses (U) et des ordonnées (V) étant égale à ladite corde *c*, un premier point extrême (*C0*) de coordonnées (1,0) étant situé au niveau dudit bord d'attaque (15), un deuxième point extrême (*C2*) de coordonnées (0,0) étant situé au niveau dudit bord de fuite (16), deux troisième et quatrième points extrêmes (*C1,C3*) formant ladite épaisseur maximale *t* dudit profil aérodynamique (11), des tangences de chaque profil aérodynamique (11) au niveau desdits troisième et quatrième points extrêmes (*C1,C3*) étant définies parallèles audit axe des abscisses (U),

**caractérisée en ce que** les coordonnées (*uCi,vCi*) desdits troisième et quatrième points extrêmes (*C1,C3*) dans ledit repère (U,V) sont définis en fonction de ladite épaisseur relative $^t/_c$ et situées dans des intervalles de variation bornés par des valeurs basses (B) et hautes (H) selon le tableau suivant :

| *t/c* | | $uC_1$ | $vC_1$ | $uC_3$ | $vC_3$ |
|---|---|---|---|---|---|
| 20% | B | 0,55 | 0,12 | 0,55 | -0,08 |
| | H | 0,70 | 0,16 | 0,75 | -0,04 |
| 25% | B | 0,63 | 0,14 | 0,55 | -0,11 |
| | H | 0,73 | 0,19 | 0,75 | -0,06 |
| 30% | B | 0,65 | 0,18 | 0,62 | -0,12 |
| | H | 0,75 | 0,22 | 0,72 | -0,08 |
| 35% | B | 0,65 | 0,20 | 0,62 | -0,15 |
| | H | 0,75 | 0,24 | 0,73 | -0,11 |
| 40% | B | 0,48 | 0,23 | 0,45 | -0,17 |
| | H | 0,63 | 0,28 | 0,65 | -0,12 |
| 50% | B | 0,35 | 0,28 | 0,37 | -0,22 |
| | H | 0,49 | 0,37 | 0,57 | -0,13 |
| 60% | B | 0,25 | 0,34 | 0,30 | -0,26 |
| | H | 0,42 | 0,45 | 0,50 | -0,15 |
| 70% | B | 0,20 | 0,44 | 0,20 | -0,26 |
| | H | 0,40 | 0,56 | 0,30 | -0,14 |

(suite)

| t/c | | $uC_1$ | $vC_1$ | $uC_3$ | $vC_3$ |
|---|---|---|---|---|---|
| 80% | B | 0,36 | 0,47 | 0,19 | -0,33 |
| | H | 0,52 | 0,57 | 0,31 | -0,23 |
| 90% | B | 0,37 | 0,47 | 0,20 | -0,43 |
| | H | 0,52 | 0,59 | 0,30 | -0,31 |
| 100% | B | 0,40 | 0,45 | 0,22 | -0,55 |
| | H | 0,50 | 0,60 | 0,32 | -0,40 |

**2.** Enveloppe aérodynamique épaisse (1) selon la revendication 1,
**caractérisée en ce que** pour chaque profil aérodynamique (11), des valeurs optimisées pour lesdites coordonnées ($uCi, vCi$) desdits troisième et quatrième points extrêmes (*C1, C3*) sont définies en fonction de ladite épaisseur relative $^t/_c$ dudit profil aérodynamique (11) dans le tableau suivant :

| t/c | $uC_1$ | $vC_1$ | $uC_3$ | $vC_3$ |
|---|---|---|---|---|
| 20% | 0,65 | 0,148 | 0,65 | -0,052 |
| 25% | 0,71 | 0,17 | 0,66 | -0,08 |
| 30% | 0,72 | 0,20 | 0,66 | -0,10 |
| 35% | 0,69 | 0,22 | 0,68 | -0,13 |
| 40% | 0,55 | 0,26 | 0,51 | -0,14 |
| 50% | 0,42 | 0,325 | 0,42 | -0,175 |
| 60% | 0,32 | 0,39 | 0,35 | -0,21 |
| 70% | 0,31 | 0,50 | 0,23 | -0,20 |
| 80% | 0,42 | 0,54 | 0,24 | -0,28 |
| 90% | 0,44 | 0,555 | 0,26 | -0,345 |
| 100% | 0,445 | 0,565 | 0,275 | -0,435 |

**3.** Enveloppe aérodynamique épaisse (1) selon l'une quelconque des revendications 1 à 2,
**caractérisée en ce que** les tangences de chaque profil aérodynamique (11) au niveau dudit bord d'attaque (15) et dudit bord de fuite (16) sont définies parallèles audit axe des ordonnées (V).

**4.** Enveloppe aérodynamique épaisse (1) selon l'une quelconque des revendications 1 à 3,
**caractérisée en ce que** les coordonnées (*u,v*) de chaque point formant un profil aérodynamique (11) épais intermédiaire ayant une épaisseur relative $^t/_c$ intermédiaire comprise entre deux épaisseurs relatives inférieure $(^t/_c)_{min}$ et supérieure $(^t/_c)_{max}$ sont définies par interpolation à partir d'un premier profil aérodynamique (11) ayant ladite épaisseur relative inférieure $(^t/_c)_{min}$ et d'un second profil aérodynamique (11) ayant ladite épaisseur relative supérieure $(^t/_c)_{max}$.

**5.** Enveloppe aérodynamique épaisse (1) selon la revendication 4,
**caractérisée en ce que** l'ordonnée *v* de chaque point dudit profil aérodynamique (11) épais intermédiaire ayant ladite épaisseur relative $^t/_c$ est déterminée par une relation :

$$v = \frac{(^t/_c) - (^t/_c)_{min}}{(^t/_c)_{max} - (^t/_c)_{min}} v_{max} + \left(1 - \frac{(^t/_c) - (^t/_c)_{min}}{(^t/_c)_{max} - (^t/_c)_{min}}\right) v_{min},$$

$v_{min}$ étant une première ordonnée d'un point dudit premier profil aérodynamique (11) ayant la même abscisse *u* que ledit point de coordonnées ($u,v$) dudit profil aérodynamique (11) intermédiaire, et $v_{max}$ étant une deuxième ordonnée d'un point dudit deuxième profil aérodynamique (11) ayant la même abscisse $u$ que ledit point de coordonnées ($u,v$) dudit profil aérodynamique (11) intermédiaire.

6. Pale (2) comportant une partie profilée (22) et un pied de pale (21),
   **caractérisée en ce qu'**une enveloppe aérodynamique épaisse (1) selon l'une quelconque des revendications 1 à 5 relie ledit pied de pale (21) à ladite partie profilée (22).

7. Rotor (10) d'un aéronef (5), ledit rotor (10) comportant un moyeu (3) et au moins deux pales (2) munies d'une partie profilée (22) et d'un pied de pale (21),
   **caractérisé en ce que** chaque pale (2) comporte une enveloppe aérodynamique épaisse (1) selon l'une quelconque des revendications 1 à 5 reliant ledit pied de pale (21) à ladite partie profilée (22) de sorte à réduire la production d'un sillage dudit rotor (10) et à limiter l'amplitude des instationnarités contenues dans ledit sillage ainsi qu'à réduire une signature fréquentielle dudit sillage.

8. Rotor (10) d'un aéronef (5), ledit rotor (10) comportant un moyeu (3), au moins deux pales (2) des dispositifs structurels de jonction (24) reliant respectivement une pale (2) audit moyeu (3) et des manchons (25) assurant un carénage de chaque dispositif structurel de jonction (24),
   **caractérisé en ce que** chaque manchon (25) est formé par une enveloppe aérodynamique épaisse (1) selon l'une quelconque des revendications 1 à 5 de sorte à réduire la production d'un sillage dudit rotor (10) et à limiter l'amplitude des instationnarités contenues dans ledit sillage ainsi qu'à réduire une signature fréquentielle dudit sillage.

9. Aéronef (5) à voilure tournante comportant un fuselage (51), une poutre de queue (52), au moins un empennage (54) et au moins un rotor (10) muni d'au moins deux pales (2),
   **caractérisé en ce que** ledit rotor (10) est selon l'une quelconque des revendications 7 à 8 de sorte d'une part à réduire la production d'un sillage dudit rotor (10) et les instationnarités dudit sillage et d'autre part à limiter l'apparition de vibrations de ladite poutre de queue (52) et/ou dudit au moins un empennage (54) générées par ledit sillage.

10. Méthode d'obtention d'une enveloppe aérodynamique épaisse (1) destinée à être agencée entre un moyeu (3) tournant d'un rotor (10) d'un aéronef (5) et une partie profilée (22) d'une pale (2) dudit rotor (10), ladite enveloppe aérodynamique épaisse (1) s'étendant d'une part selon une direction longitudinale (X) en envergure d'une première zone extrémale (13) vers une seconde zone extrémale (14) et d'autre part selon une direction transversale (Y) d'un bord d'attaque (15) vers un bord de fuite (16), ladite enveloppe aérodynamique épaisse (1) étant formée par une succession de profils aérodynamiques (11) épais situés dans des plans parallèles à un plan transversal ($P_{YZ}$) perpendiculaire à ladite direction longitudinale (X) en envergure, chaque profil aérodynamique (11) épais comportant un profil d'extrados (17) et un profil d'intrados (18), chaque profil aérodynamique (11) épais étant défini par une corde $c$ entre ledit bord d'attaque (15) et ledit bord de fuite (16), une épaisseur $t$ égale à une distance maximale entre ledit profil d'extrados (17) et ledit profil d'intrados (18) mesurée perpendiculairement à ladite corde $c$ et une épaisseur relative $t/_c$ égale au rapport de ladite épaisseur maximale $t$ par ladite corde $c$, ladite épaisseur relative $t/_c$ étant supérieure ou égale à 20% pour chaque profil aérodynamique (11) épais, **caractérisée en ce que** ladite méthode comporte les étapes suivantes permettant de définir chaque profil aérodynamique (11) :

    - première création (101) de ($m+1$) points caractéristiques ($A0$, ,...,$Ai$,...,$Am$) appartenant audit profil aérodynamique (11), $i$ étant un entier positif variant de 0 à $m$, chaque point caractéristique ($Ai$) étant défini dans un repère (U,V) attaché audit profil aérodynamique (11) et défini par un axe des abscisses (U) formé par la direction de ladite corde $c$ et un axe des ordonnées (V) perpendiculaire audit axe des abscisses (U), une unité desdits axes des abscisses (U) et des ordonnées (V) étant égale à ladite corde $c$,
    - deuxième création (102) de points de contrôle ($Bi.j$), $n$ points de contrôle ($Bi.j$) étant situés respectivement entre deux points caractéristiques consécutifs ($Ai,Ai+1$) et étant des points de construction dudit profil aérodynamique (11) entre lesdits deux points caractéristiques consécutifs ($Ai,Ai+1$), $n$ étant un entier positif supérieur ou égal à 2, $j$ étant un entier positif variant de 1 à $n$, ($i+1$) étant remplacé par la valeur nulle « 0 » lorsque $i$ est égal à $m$, et
    - détermination (103) dudit profil aérodynamique (11), ($m+1$) courbes reliant respectivement deux points caractéristiques consécutifs ($Ai,Ai+1$) et étant construites à partir desdits points de contrôle ($Bi.j$), lesdites ($m+1$) courbes (41-44) étant reliées deux à deux afin de former ledit profil aérodynamique (11), ledit profil aérodynamique (11) passant par des points extrêmes ($C0,C1,C2,C3$), un premier point extrême ($C0$) de coordonnées (1,0) étant situé au niveau dudit bord d'attaque (15), un deuxième point extrême ($C2$) de coordonnées (0,0) étant situé au niveau dudit bord de fuite (16), deux troisième et quatrième points extrêmes ($C1,C3$) formant ladite épaisseur maximale $t$, les tangences dudit profil aérodynamique (11) au niveau desdits troisième et quatrième points extrêmes ($C1,C3$) étant définies parallèles audit axe des abscisses (U) et les coordonnées ($uCi,vCi$) desdits troisième et quatrième points extrêmes ($C1,C3$) dans ledit repère (U,V) étant définis en fonction de ladite épaisseur relative $t/_c$ et situées dans des intervalles de variation bornés par des valeurs basses (B) et hautes (H) selon le tableau suivant :

| $t/c$ | | $uC_1$ | $vC_1$ | $uC_3$ | $vC_3$ |
|---|---|---|---|---|---|
| 20% | B | 0,55 | 0,12 | 0,55 | -0,08 |
| | H | 0,70 | 0,16 | 0,75 | -0,04 |
| 25% | B | 0,63 | 0,14 | 0,55 | -0,11 |
| | H | 0,73 | 0,19 | 0,75 | -0,06 |
| 30% | B | 0,65 | 0,18 | 0,62 | -0,12 |
| | H | 0,75 | 0,22 | 0,72 | -0,08 |
| 35% | B | 0,65 | 0,20 | 0,62 | -0,15 |
| | H | 0,75 | 0,24 | 0,73 | -0,11 |
| 40% | B | 0,48 | 0,23 | 0,45 | -0,17 |
| | H | 0,63 | 0,28 | 0,65 | -0,12 |
| 50% | B | 0,35 | 0,28 | 0,37 | -0,22 |
| | H | 0,49 | 0,37 | 0,57 | -0,13 |
| 60% | B | 0,25 | 0,34 | 0,30 | -0,26 |
| | H | 0,42 | 0,45 | 0,50 | -0,15 |
| 70% | B | 0,20 | 0,44 | 0,20 | -0,26 |
| | H | 0,40 | 0,56 | 0,30 | -0,14 |
| 80% | B | 0,36 | 0,47 | 0,19 | -0,33 |
| | H | 0,52 | 0,57 | 0,31 | -0,23 |
| 90% | B | 0,37 | 0,47 | 0,20 | -0,43 |
| | H | 0,52 | 0,59 | 0,30 | -0,31 |
| 100% | B | 0,40 | 0,45 | 0,22 | -0,55 |
| | H | 0,50 | 0,60 | 0,32 | -0,40 |

11. Méthode selon la revendication 10,
**caractérisée en ce que** pour chaque profil aérodynamique (11), des valeurs optimisées pour lesdites coordonnées ($uCi,vCi$) desdits troisième et quatrième points extrêmes ($C1,C3$) sont définies en fonction de ladite épaisseur relative $t/_c$ dudit profil aérodynamique (11) dans le tableau suivant :

| $t/c$ | $uC_1$ | $vC_1$ | $uC_3$ | $vC_3$ |
|---|---|---|---|---|
| 20% | 0,65 | 0,148 | 0,65 | -0,052 |
| 25% | 0,71 | 0,17 | 0,66 | -0,08 |
| 30% | 0,72 | 0,20 | 0,66 | -0,10 |
| 35% | 0,69 | 0,22 | 0,68 | -0,13 |
| 40% | 0,55 | 0,26 | 0,51 | -0,14 |

(suite)

| t/c | uC_1 | vC_1 | uC_3 | vC_3 |
|-----|------|------|------|------|
| 50% | 0,42 | 0,325 | 0,42 | -0,175 |
| 60% | 0,32 | 0,39 | 0,35 | -0,21 |
| 70% | 0,31 | 0,50 | 0,23 | -0,20 |
| 80% | 0,42 | 0,54 | 0,24 | -0,28 |
| 90% | 0,44 | 0,555 | 0,26 | -0,345 |
| 100% | 0,445 | 0,565 | 0,275 | -0,435 |

**12.** Méthode selon l'une quelconque des revendications 10 à 11,
**caractérisée en ce que** lesdits points de contrôle (*Bi.j*) sont situés dans une zone représentant un troisième intervalle [-25%,125%] d'une zone couverte par lesdits deux points caractéristiques consécutifs (*Ai,Ai+1*) de sorte à éviter des courbures trop extrêmes pour chaque profil aérodynamique (11) ainsi que l'apparition de points d'inflexion et de rebroussement sur ledit profil aérodynamique (11) lors de ladite détermination (103) dudit profil aérodynamique (11).

**13.** Méthode selon l'une quelconque des revendications 10 à 12,
**caractérisée en ce qu'**au cours de ladite première étape de première création (101), les tangences dudit profil aérodynamique (11) au niveau desdits premier et deuxième points extrêmes (*C0,C2*) sont définies parallèles audit axe des ordonnées (V).

**14.** Méthode selon l'une quelconque des revendications 10 à 13,
**caractérisée en ce qu'**au cours de ladite première étape de première création (101), quatre points caractéristiques (*A0,A1,A2,A3*) sont créés, lesdits points caractéristiques (*A0,A1,A2,A3*) étant lesdits points extrêmes (*C0,C1,C2,C3*).

**15.** Méthode selon la revendication 14,
**caractérisée en ce que**, lesdites quatre courbes (41-44) étant constituées par des courbes de Bézier d'ordre 3, lesdites tangences dudit profil aérodynamique (11) au niveau desdits premier et deuxième points caractéristiques (*A0,A2*) étant définies parallèles audit axe des ordonnées (V), lesdits points de contrôle (*B0.1,B0.2,B1.1,B1.2,B2.1,B2.2,B3.1,B3.2*) sont définis en fonction de ladite épaisseur relative $t/_c$ et selon le tableau suivant définissant pour lesdits points de contrôle *(Bi.j),* des intervalles de variation bornés par des valeurs basses (B) et hautes (H) pour des coefficients (*CuBi.j,CvBi.j*), lesdits coefficients (*CuBi.j,CvBi.j*) définissant la position desdits points de contrôle *(Bi.j)* par rapport auxdits deux points caractéristiques consécutifs (*Ai,Ai+1*), chaque coefficient (*CuBi.j,CvBi.j*) étant multiplié par une distance entre lesdits deux points caractéristiques consécutifs (*Ai,Ai+1*) parallèlement respectivement auxdits axes des abscisses (U) et des ordonnées (V) afin de définir ladite position dudit point de contrôle (*Bi.j*) par rapport audit point caractéristique (*Ai*) parallèlement respectivement auxdits axes des abscisses (U) et des ordonnées (V) :

| t/c | | CvB_0.1 | CuB_0.2 | CuB_1.1 | CvB_1.2 | CvB_2.1 | CuB_2.2 | CvB_3.1 | CuB_3.2 |
|-----|---|------|------|------|------|------|------|------|------|
| 20% | B | 0,80 | 0,10 | 0,30 | -0.10 | 0,50 | 0 | 0,65 | 0 |
| | H | 0,90 | 0,25 | 0,40 | 0,10 | 0.90 | 0,05 | 0,85 | 0,15 |
| 25% | B | 0,80 | 0,30 | 0,80 | 0,30 | 0,40 | 0,20 | 0,80 | 0,50 |
| | H | 0,90 | 0,50 | 0,85 | 0,60 | 0,80 | 0,30 | 0,90 | 0,80 |
| 30% | B | 0,35 | 0,10 | 0,40 | 0,05 | 0,35 | 0,20 | 0,80 | 0,50 |
| | H | 0,45 | 0,20 | 0,50 | 0,25 | 0,70 | 0,30 | 0,90 | 0,65 |
| 35% | B | 0,74 | 0,34 | 0,60 | 0,22 | 0,25 | 0,15 | 0,80 | 0,50 |
| | H | 0,88 | 0,70 | 0,70 | 0,32 | 0,50 | 0,30 | 0,90 | 0,65 |

(suite)

| t/c | | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|---|---|---|---|---|---|---|---|---|---|
| 40% | B | 0,85 | 0,35 | 0,65 | 0,12 | 0,77 | 0,45 | 0,70 | 0,37 |
| | H | 1,10 | 0,52 | 0,86 | 0,24 | 1,10 | 0,65 | 0,95 | 0,65 |
| 50% | B | 0,70 | 0,15 | 0,67 | 0,05 | 0,81 | 0,39 | 0,77 | 0,41 |
| | H | 0,90 | 0,30 | 0,86 | 0,14 | 1,00 | 0,63 | 0,98 | 0,61 |
| 60% | B | 0,60 | 0,10 | 0,70 | 0,05 | 0,70 | 0,25 | 0,15 | 0,00 |
| | H | 0,80 | 0,20 | 0,85 | 0,12 | 0,80 | 0,35 | 0,35 | 0,15 |
| 70% | B | 0,75 | 0,08 | 0,65 | -0,03 | 0,70 | 0,25 | 0,22 | -,05 |
| | H | 0,90 | 0,16 | 0,90 | 0,05 | 0,80 | 0,35 | 0,45 | 0,15 |
| 80% | B | 0,85 | 0,20 | 0,65 | -0,04 | 0,60 | 0,30 | 0,80 | 0,57 |
| | H | 1,05 | 0,35 | 0,92 | 0,05 | 0,90 | 0,50 | 0,90 | 0,85 |
| 90% | B | 0,80 | 0,15 | 0,71 | -0,03 | 0,65 | 0,43 | 0,79 | 0,57 |
| | H | 0,98 | 0,28 | 0,93 | 0,15 | 0,93 | 0,60 | 0,94 | 0,81 |
| 100% | B | 0,75 | 0,10 | 0,75 | 0,00 | 0,65 | 0,50 | 0,77 | 0,60 |
| | H | 0,95 | 0,25 | 0,95 | 0,25 | 1,00 | 0,70 | 0,97 | 0,80 |

**16.** Méthode selon la revendication 15,
**caractérisée en ce que** pour chaque profil aérodynamique (11), des valeurs optimisées pour lesdits coefficients ($CuBi.j,CvBi.j$) desdits points de contrôle ($B0.1,B0.2,B1.1,B1.2,B2.1,B2.2,B3.1,B3.2$) sont définies en fonction de ladite épaisseur relative $t/_c$ dudit profil aérodynamique (11) dans le tableau suivant :

| t/c | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|---|---|---|---|---|---|---|---|---|
| 20% | 0,85 | 0,22 | 0,37 | 0 | 0,60 | 0 | 0,70 | 0,10 |
| 25% | 0,85 | 0,42 | 0,81 | 0,42 | 0,50 | 0,22 | 0,85 | 0,69 |
| 30% | 0,38 | 0,13 | 0,44 | 0,16 | 0,49 | 0,24 | 0,85 | 0,65 |
| 35% | 0,81 | 0,44 | 0,66 | 0,24 | 0,34 | 0,22 | 0,85 | 0,65 |
| 40% | 0,97 | 0,45 | 0,76 | 0,20 | 0,91 | 0,54 | 0,85 | 0,54 |
| 50% | 0,83 | 0,21 | 0,76 | 0,07 | 0,93 | 0,56 | 0,88 | 0,54 |
| 60% | 0,75 | 0,15 | 0,80 | 0,05 | 0,75 | 0,29 | 0,25 | 0,10 |
| 70% | 0,85 | 0,11 | 0,71 | -0,01 | 0,75 | 0,29 | 0,40 | 0 |
| 80% | 0,95 | 0,27 | 0,75 | 0 | 0,73 | 0,45 | 0,85 | 0,69 |
| 90% | 0,86 | 0,21 | 0,81 | 0,09 | 0,78 | 0,53 | 0,88 | 0,69 |
| 100% | 0,82 | 0,16 | 0,83 | 0,16 | 0,78 | 0,57 | 0,89 | 0,69 |

**17.** Méthode selon l'une quelconque des revendications 10 à 16,
**caractérisée en ce que** les coordonnées ($u,v$) de chaque point formant un profil aérodynamique (11) épais intermédiaire ayant une épaisseur relative $t/_c$ intermédiaire comprise entre deux épaisseurs relatives inférieure $(t/_c)_{min}$ et supérieure $(t/_c)_{max}$ sont définies par interpolation à partir d'un premier profil aérodynamique (11) ayant ladite épaisseur relative inférieure $(t/_c)_{min}$ et d'un second profil aérodynamique (11) ayant ladite épaisseur relative supérieure $(t/_c)_{max}$.

**18.** Méthode selon la revendication 17,

**caractérisée en ce que** l'ordonnée *v* de chaque point dudit profil aérodynamique (11) épais intermédiaire ayant ladite épaisseur relative $^t/_c$ est déterminée par la relation :

$$v = \frac{(^t/_c)-(^t/_c)_{\min}}{(^t/_c)_{\max}-(^t/_c)_{\min}} v_{max} + \left(1 - \frac{(^t/_c)-(^t/_c)_{\min}}{(^t/_c)_{\max}-(^t/_c)_{\min}}\right) v_{min},$$

$v_{min}$ étant une première ordonnée d'un point dudit premier profil aérodynamique (11) ayant la même abscisse *u* que ledit point de coordonnées (*u,v*) dudit profil aérodynamique (11) intermédiaire, et $v_{max}$ étant une deuxième ordonnée d'un point dudit deuxième profil aérodynamique (11) ayant la même abscisse *u* que ledit point de coordonnées (*u,v*) dudit profil aérodynamique (11) intermédiaire.

19. Méthode selon l'une quelconque des revendications 10 à 18,
    **caractérisée en ce que** ladite méthode comporte une première étape complémentaire de simulation (104) permettant de simuler le comportement aérodynamique dudit profil aérodynamique (11) lorsqu'il est balayé par un premier flux d'air dudit bord d'attaque (15) vers ledit bord de fuite (16) et par un second flux d'air dudit bord de fuite (16) vers ledit bord d'attaque (15).

20. Méthode selon l'une quelconque des revendications 10 à 19,
    **caractérisée en ce que** ladite méthode comporte une deuxième étape complémentaire de définition (105) de ladite enveloppe aérodynamique épaisse (1) en combinant des profils aérodynamiques (11) définis lors de ladite détermination (103) dudit profil aérodynamique (11).

21. Méthode selon la revendication 20,
    **caractérisée en ce que** ladite méthode comporte une troisième étape complémentaire d'obtention (106) de ladite enveloppe aérodynamique épaisse (1).

**Patentansprüche**

1. Dicke aerodynamische Hülle (1) zur Anbringung zwischen einer rotierenden Nabe (3) eines Rotors (10) eines Luftfahrzeugs (5) und einem profilierten Teil (22) eines Blattes (2) des Rotors (10), wobei die dicke aerodynamische Hülle (1) sich einerseits in einer Längsrichtung (X) in der Spannweite von einer ersten Endzone (13) zu einer zweiten Endzone (14) und andererseits in einer Querrichtung (Y) von einer Vorderkante (15) zu einer Hinterkante (16) erstreckt, wobei die dicke aerodynamische Hülle (1) durch eine Folge von dicken aerodynamischen Profilen (11) gebildet ist, die in Ebenen parallel zu einer zu der Längsrichtung (X) in der Spannweite senkrechten Querebene ($P_{YZ}$) angeordnet sind, wobei jedes dicke aerodynamische Profil (11) ein Oberseitenprofil (17) und ein Unterseitenprofil (18) aufweist, wobei jedes dicke aerodynamische Profil (11) definiert ist durch eine Sehne c zwischen der Vorderkante (15) und der Hinterkante (16), eine Dicke t gleich einem maximalen Abstand zwischen dem Oberseitenprofil (17) und dem Unterseitenprofil (18), gemessen senkrecht zu der Sehne c, und eine relative Dicke t/c gleich dem Verhältnis der maximalen Dicke t zu der Sehne c, wobei die relative Dicke t/c für jedes dicke Profil (11) größer oder gleich 20% ist, wobei jedes aerodynamische Profil (11) durch Endpunkte (C0, C1, C2, C3) verläuft, wobei jeder Endpunkt (C0, C1, C2, C3) in einem Bezugssystem (U, V) definiert ist, das mit dem aerodynamischen Profil (11) verbunden ist und durch eine Abszissenachse (U), die durch die Richtung der Sehne c definiert ist, und eine zur Abszissenachse (U) senkrechte Ordinatenachse (V) gebildet ist, wobei eine Einheit der Abszissen- (U) und Ordinatenachsen (V) gleich der Sehne c ist, ein erster Endpunkt (C0) mit den Koordinaten (1,0) an der Vorderkante (15) und ein zweiter Endpunkt (C2) mit den Koordinaten (0,0) an der Hinterkante (16) liegt, zwei dritte und vierte Endpunkte (C1, C3) die maximale Dicke t des Profils (11) bilden, wobei Tangenten jedes aerodynamischen Profils (11) an den dritten und vierten Endpunkten (C1, C3) parallel zur Abszissenachse (U) definiert sind, **dadurch gekennzeichnet, dass** die Koordinaten (uCi, vCi) des dritten und vierten Endpunktes (C1, C3) in dem Bezugssystem (U, V) als Funktion der relativen Dicke t/c definiert sind und innerhalb von Variationsintervallen liegen, die durch niedrige (B) und hohe (H) Werte gemäß der folgenden Tabelle begrenzt sind:

| t/c | | $uC_1$ | $vC_1$ | $uC_3$ | $vC_3$ |
|---|---|---|---|---|---|
| 20% | B | 0,55 | 0,12 | 0,55 | -0,08 |
| | H | 0,70 | 0,16 | 0,75 | -0,04 |
| 25% | B | 0,63 | 0,14 | 0,55 | -0,11 |
| | H | 0,73 | 0,19 | 0,75 | -0,06 |
| 30% | B | 0,65 | 0,18 | 0,62 | -0,12 |
| | H | 0,75 | 0,22 | 0,72 | -0,08 |
| 35% | B | 0,65 | 0,20 | 0,62 | -0,15 |
| | H | 0,75 | 0,24 | 0,73 | -0,11 |
| 40% | B | 0,48 | 0,23 | 0,45 | -0,17 |
| | H | 0,63 | 0,28 | 0,65 | -0,12 |
| 50% | B | 0,35 | 0,28 | 0,37 | -0,22 |
| | H | 0,49 | 0,37 | 0,57 | -0,13 |
| 60% | B | 0,25 | 0,34 | 0,30 | -0,26 |
| | H | 0,42 | 0,45 | 0,50 | -0,15 |
| 70% | B | 0,20 | 0,44 | 0,20 | -0 ,26 |
| | H | 0,40 | 0,56 | 0,30 | -0,14 |
| 80% | B | 0,36 | 0,47 | 0,19 | -0,33 |
| | H | 0,52 | 0,57 | 0,31 | -0,23 |
| 90% | B | 0,37 | 0,47 | 0,20 | -0,43 |
| | H | 0,52 | 0,59 | 0,30 | -0,31 |
| 100% | B | 0,40 | 0,45 | 0,22 | -0,55 |
| | H | 0,50 | 0,60 | 0,32 | -0,40 |

2. Dicke aerodynamische Hülle (1) nach Anspruch 1,
**dadurch gekennzeichnet, dass** für jedes aerodynamische Profil (11) optimierte Werte für die Koordinaten (uCi, vCi) des dritten und vierten Endpunktes (C1, C3) in Abhängigkeit von der relativen Dicke t/c des aerodynamischen Profils (11) in der folgenden Tabelle definiert sind:

| t/c | $uC_1$ | $vC_1$ | $uC_3$ | $vC_3$ |
|---|---|---|---|---|
| 20% | 0,65 | 0,148 | 0,65 | -0,052 |
| 25% | 0,71 | 0,17 | 0,66 | -0,08 |
| 30% | 0,72 | 0,20 | 0,66 | -0,10 |
| 35% | 0,69 | 0,22 | 0,68 | -0,13 |
| 40% | 0,55 | 0,26 | 0,51 | -0,14 |
| 50% | 0,42 | 0,325 | 0,42 | -0,175 |
| 60% | 0,32 | 0,39 | 0,35 | -0,21 |
| 70% | 0,31 | 0,50 | 0,23 | -0,20 |
| 80% | 0,42 | 0,54 | 0,24 | -0,28 |
| 90% | 0,44 | 0,555 | 0,26 | -0,345 |
| 100% | 0,445 | 0,565 | 0,275 | -0,435 |

3. Dicke aerodynamische Hülle (1) nach einem der Ansprüche 1 bis 2,
**dadurch gekennzeichnet, dass** die Tangenten jedes aerodynamischen Profils (11) an der Vorderkante (15) und der Hinterkante (16) parallel zur Ordinatenachse (V) definiert sind.

4. Dicke aerodynamische Hülle (1) nach einem der Ansprüche 1 bis 3,
**dadurch gekennzeichnet, dass** die Koordinaten (u, v) jedes Punktes, der ein intermediäres dickes aerodynamisches Profil (11) mit einer intermediären relativen Dicke t/c zwischen zwei relativen Dicken, nämlich einer unteren $(t/c)_{min}$ und einer oberen $(t/c)_{max}$, bildet, durch Interpolation aus einem ersten aerodynamischen Profil (11) mit der besagten unteren relativen Dicke $(t/C)_{min}$ und einem zweiten aerodynamischen Profil (11) mit der besagten oberen relativen Dicke $(t/c)_{max}$ definiert sind.

5. Dicke aerodynamische Hülle (1) nach Anspruch 4,
**dadurch gekennzeichnet, dass** die Ordinate v jedes Punktes des intermediären dicken aerodynamischen Profils (11) mit der relativen Dicke t/c durch eine Beziehung

$$v = \frac{(t/_c)-(t/_c)_{min}}{(t/_c)_{max}-(t/_c)_{min}} v_{max} + \left(1 - \frac{(t/_c)-(t/_c)_{min}}{(t/_c)_{max}-(t/_c)_{min}}\right) v_{min},$$

bestimmt ist, wobei $v_{min}$ eine erste Ordinate eines Punktes des ersten aerodynamischen Profils (11) mit der gleichen Abszisse u wie der Koordinatenpunkt (u,v) des intermediären aerodynamischen Profils (11) ist, und $v_{max}$ eine zweite Ordinate eines Punktes des zweiten aerodynamischen Profils (11) mit der gleichen Abszisse u wie der Koordinatenpunkt (u,v) des intermediären aerodynamischen Profils (11) ist.

6. Blatt (2) mit einem profilierten Teil (22) und einem Blattfuß (21),
**dadurch gekennzeichnet, dass** eine dicke aerodynamische Hülle (1) nach einem der Ansprüche 1 bis 5 den Blattfuß (21) mit dem profilierten Teil (22) verbindet.

7. Rotor (10) eines Luftfahrzeugs (5), wobei der Rotor (10) eine Nabe (3) und mindestens zwei Blätter (2) umfasst, die mit einem profilierten Teil (22) und einem Blattfuß (21) versehen sind,
**dadurch gekennzeichnet, dass** jedes Blatt (2) eine dicke aerodynamische Hülle (1) nach einem der Ansprüche 1 bis 5 aufweist, die den Blattfuß (21) mit dem profilierten Teil (22) verbindet, um die Erzeugung eines Wirbelzugs des Rotors (10) zu verringern und die Amplitude der in diesem Wirbelzug enthaltenen Unstetigkeiten zu begrenzen sowie eine Frequenzsignatur des Wirbelzugs zu reduzieren.

8. Rotor (10) eines Luftfahrzeugs (5), wobei der Rotor (10) eine Nabe (3), mindestens zwei Blätter (2), Strukturverbindungsvorrichtungen (24), die jeweils ein Blatt (2) mit der Nabe (3) verbinden, und Muffen (25), die eine Verkleidung für jede Strukturverbindungsvorrichtung (24) bereitstellen, umfasst,
**dadurch gekennzeichnet, dass** jede Muffe (25) durch eine dicke aerodynamische Hülle (1) nach einem der Ansprüche 1 bis 5 gebildet ist, um die Erzeugung eines Wirbelzugs des Rotors (10) zu verringern und die Amplitude der in diesem Wirbelzug enthaltenen Unstetigkeiten zu begrenzen sowie eine Frequenzsignatur des Wirbelzugs zu reduzieren.

9. Drehflügelflugzeug (5) mit einem Rumpf (51), einem Heckausleger (52), mindestens einem Höhenleitwerk (54) und mindestens einem Rotor (10), der mit mindestens zwei Blättern (2) versehen ist,
**dadurch gekennzeichnet, dass** der Rotor (10) einem der Ansprüche 7 bis 8 entspricht, um einerseits die Erzeugung eines Wirbelzugs des Rotors (10) und Unstetigkeiten des Wirbelzugs zu reduzieren und andererseits das Auftreten von Vibrationen des Heckauslegers (52) und/oder des mindestens einen Leitwerks (54), die durch den Wirbelzug erzeugt werden, zu begrenzen.

10. Verfahren zum Erhalten einer dicken aerodynamischen Hülle (1) zur Anbringung zwischen einer rotierenden Nabe (3) eines Rotors (10) eines Luftfahrzeugs (5) und einem profilierten Teil (22) eines Blattes (2) des Rotors (10), wobei die dicke aerodynamische Hülle (1) sich einerseits in einer Längsrichtung (X) in der Spannweite von einer ersten Endzone (13) zu einer zweiten Endzone (14) und andererseits in einer Querrichtung (Y) von einer Vorderkante (15) zu einer Hinterkante (16) erstreckt, wobei die dicke aerodynamische Hülle (1) durch eine Folge von dicken aerodynamischen Profilen (11) gebildet wird, die in Ebenen parallel zu einer zu der Längsrichtung (X) in der Spannweite senkrechten Querebene ($P_{YZ}$) angeordnet sind, wobei jedes dicke aerodynamische Profil (11) ein Oberseitenprofil (17) und ein Unterseitenprofil (18) aufweist, wobei jedes dicke aerodynamische Profil (11) definiert ist durch eine Sehne c zwischen der Vorderkante (15) und der Hinterkante (16), eine Dicke t gleich einem maximalen Abstand zwischen dem Oberseitenprofil (17) und dem Unterseitenprofil (18), gemessen senkrecht zu der Sehne c, und eine relative Dicke t/c gleich dem Verhältnis der maximalen Dicke t zu der Sehne c, wobei die relative Dicke t/c für jedes dicke Profil (11) größer oder gleich 20% ist,

**dadurch gekennzeichnet, dass** das Verfahren die folgenden Schritte zum Definieren jedes aerodynamischen Profils (11) umfasst:

- erstes Erzeugen (101) von (m+1) charakteristischen Punkten (A0,...,Ai,...,Am), die zu dem aerodynamischen Profil (11) gehören, wobei i eine positive ganze Zahl von 0 bis m ist, wobei jeder charakteristische Punkt (Ai) in einem Bezugssystem (U, V) definiert ist, das mit dem aerodynamischen Profil (11) verbunden ist und durch eine Abszissenachse (U), die durch die Richtung der Sehne c definiert ist, und eine zu der Abszissenachse (U) senkrechte Ordinatenachse (V) gebildet ist, wobei eine Einheit der Abszissen- (U) und Ordinatenachse (V) gleich der Sehne c ist,

- zweites Erzeugen (102) von Kontrollpunkten (Bi.j), wobei n Kontrollpunkte (Bi.j) jeweils zwischen zwei aufeinander folgenden charakteristischen Punkten (Ai, Ai+1) liegen und Konstruktionspunkte des aerodynamischen Profils (11) zwischen den beiden aufeinander folgenden charakteristischen Punkten (Ai, Ai+1) sind, wobei n eine positive ganze Zahl größer oder gleich 2 ist und j eine positive ganze Zahl von 1 bis n ist, wobei (i+1) durch den Nullwert "0" ersetzt wird, wenn i gleich m ist, und

- Bestimmen (103) des aerodynamischen Profils (11), wobei (m+1) Kurven jeweils zwei aufeinanderfolgende charakteristische Punkte (Ai, Ai+1) verbinden und aus den Kontrollpunkten (Bi.j) konstruiert werden, wobei die (m+1) Kurven (41-44) paarweise verbunden werden, um das aerodynamische Profil (11) zu bilden, wobei das Profil (11) durch Endpunkte (C0, C1, C2, C3) verläuft, wobei ein erster Endpunkt (C0) mit den Koordinaten (1, 0) an der Vorderkante (15) liegt, ein zweiter Endpunkt (C2) mit den Koordinaten (0, 0) an der Hinterkante (16) liegt, zwei dritte und vierte Endpunkte (C1, C3) die maximale Dicke t bilden, wobei die Tangenten des aerodynamischen Profils (11) an den dritten und vierten Endpunkten (C1, C3) parallel zur Abszissenachse (U) definiert sind und die Koordinaten (uCi,vCi) des dritten und vierten Endpunkts (C1, C3) in dem Bezugssystem (U, V) als eine Funktion der relativen Dicke t/c definiert sind und innerhalb von Variationsbereichen liegen, die durch niedrige (B) und hohe (H) Werte gemäß der folgenden Tabelle begrenzt sind:

| t/c | | $uC_1$ | $vC_1$ | $uC_3$ | $vC_3$ |
|---|---|---|---|---|---|
| 20% | B | 0,55 | 0,12 | 0,55 | -0,08 |
| | H | 0,70 | 0,16 | 0,75 | -0,04 |
| 25% | B | 0,63 | 0,1 4 | 0,55 | -0,11 |
| | H | 0,73 | 0,19 | 0,75 | -0,06 |
| 30% | B | 0,65 | 0,18 | 0,62 | -0,12 |
| | H | 0,75 | 0,22 | 0,72 | -0,08 |
| 35% | B | 0,65 | 0,20 | 0,62 | -0,15 |
| | H | 0,75 | 0,24 | 0,73 | -0,11 |
| 40% | B | 0,48 | 0,23 | 0,45 | -0,17 |
| | H | 0,63 | 0,28 | 0,65 | -0,12 |
| 50% | B | 0,35 | 0,28 | 0,37 | -0,22 |
| | H | 0,49 | 0,37 | 0,57 | -0,13 |
| 60% | B | 0,25 | 0,34 | 0,30 | -0,26 |
| | H | 0,42 | 0,45 | 0,50 | -0,15 |
| 70% | B | 0,20 | 0,44 | 0,20 | -0,26 |
| | H | 0,40 | 0,56 | 0,30 | -0,14 |

(fortgesetzt)

| t/c | | $uC_1$ | $vC_1$ | $uC_3$ | $vC_3$ |
|---|---|---|---|---|---|
| 80% | B | 0,36 | 0,47 | 0,19 | -0,33 |
| | H | 0,52 | 0,57 | 0,31 | -0,23 |
| 90% | B | 0,37 | 0,47 | 0,20 | -0,43 |
| | H | 0,52 | 0,59 | 0,30 | -0,31 |
| 100% | B | 0,40 | 0,45 | 0,22 | -0,55 |
| | H | 0,50 | 0,60 | 0,32 | -0,40 |

**11.** Verfahren nach Anspruch 10,
   **dadurch gekennzeichnet, dass** für jedes aerodynamische Profil (11) optimierte Werte für die Koordinaten (uCi, vCi) des dritten und vierten Endpunktes (C1, C3) in Abhängigkeit von der relativen Dicke t/c des aerodynamischen Profils (11) in der folgenden Tabelle definiert sind:

| t/c | $uC_1$ | $vC_1$ | $uC_3$ | $vC_3$ |
|---|---|---|---|---|
| 20% | 0,65 | 0,148 | 0,65 | -0,052 |
| 25% | 0,71 | 0,17 | 0,66 | -0,08 |
| 30% | 0,72 | 0,20 | 0,66 | -0,10 |
| 35% | 0,69 | 0,22 | 0,68 | -0,13 |
| 40% | 0,55 | 0,26 | 0,51 | -0,14 |
| 50% | 0,42 | 0,325 | 0,42 | -0,175 |
| 60% | 0,32 | 0,39 | 0,35 | -0,21 |
| 70% | 0,31 | 0,50 | 0,23 | -0,20 |
| 80% | 0,42 | 0,54 | 0,24 | -0,28 |
| 90% | 0,44 | 0,555 | 0,26 | -0,345 |
| 100% | 0,445 | 0,565 | 0,275 | -0,435 |

**12.** Verfahren nach einem der Ansprüche 10 bis 11,
   **dadurch gekennzeichnet, dass** die Kontrollpunkte (Bi.j) in einem Bereich angeordnet sind, der ein drittes Intervall [-25%, 125%] eines Bereichs darstellt, der von den zwei aufeinander folgenden charakteristischen Punkten (Ai, Ai+1) abgedeckt wird, um zu extreme Krümmungen für jedes aerodynamische Profil (11) sowie das Auftreten von Wende- und Umkehrpunkten auf dem aerodynamischen Profil (11) während des Bestimmens (103) des aerodynamischen Profils (11) zu vermeiden.

**13.** Verfahren nach einem der Ansprüche 10 bis 12,
   **dadurch gekennzeichnet, dass** während des ersten Schrittes des Erzeugens (101) die Tangenten des aerodynamischen Profils (11) an den ersten und zweiten Endpunkten (60, 62) parallel zu der Ordinatenachse (V) definiert werden.

**14.** Verfahren nach einem der Ansprüche 10 bis 13,
   **dadurch gekennzeichnet, dass** in dem ersten Schritt des Erzeugens (101) vier charakteristische Punkte (A0, A1, A2, A3) erzeugt werden, wobei die charakteristischen Punkte (A0, A1, A2, A3) die Endpunkte (C0, C1, C2, C3) sind.

**15.** Verfahren nach Anspruch 14,
   **dadurch gekennzeichnet, dass** die vier Kurven (41-44) durch Bezier-Kurven dritter Ordnung gebildet werden, wobei die Tangenten des aerodynamischen Profils (11) am ersten und zweiten charakteristischen Punkt (A0, A2) parallel zur Ordinatenachse (V) definiert sind, wobei die Kontrollpunkte (B0.1, B0.2, B1.1, B1.2, B2.1, B2.2, B3.1, B3.2) als Funktion der relativen Dicke t/c und gemäß der folgenden Tabelle definiert sind, die für die Kontrollpunkte (Bi.j) Variationsintervalle definiert, die durch niedrige (B) und hohe (H) Werte für die Koeffizienten (CuBi.j, CvBi.j) begrenzt sind, wobei die Koeffizienten (CuBi.j, CvBi.j) die Position der Kontrollpunkte (Bi.j) in Bezug auf die zwei aufeinanderfolgenden charakteristischen Punkte (Ai, Ai+1) definieren, wobei jeder Koeffizient (CuBi.j, CvBi.j) mit einem Abstand zwischen den beiden aufeinanderfolgenden charakteristischen Punkten (Ai, Ai+1) parallel zu den Abszissen- (U) bzw. Ordinaten-(V) Achsen multipliziert wird, um die Position des Kontrollpunktes (Bi.j) in Bezug auf den charakteristischen Punkt (Ai) parallel zu den Abszissen- (U) bzw. Ordinaten- (V) Achsen zu definieren:

| t/c | | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|---|---|---|---|---|---|---|---|---|---|
| 20% | B | 0,80 | 0,10 | 0,30 | -0.10 | 0,50 | 0 | 0,65 | 0 |
| | H | 0,90 | 0,25 | 0,40 | 0,10 | 0-90 | 0,05 | 0,85 | 0,15 |
| 25% | B | 0,80 | 0,30 | 0,80 | 0,30 | 0,40 | 0,20 | 0,80 | 0,50 |
| | H | 0,90 | 0,50 | 0,85 | 0,60 | 0,80 | 0,30 | 0,90 | 0,80 |
| 30% | B | 0,35 | 0,10 | 0,40 | 0,05 | 0,35 | 0,20 | 0,80 | 0,50 |
| | H | 0,45 | 0,20 | 0,50 | 0,25 | 0,70 | 0,30 | 0,90 | 0,65 |
| 35% | B | 0,74 | 0,34 | 0,60 | 0,22 | 0,25 | 0,15 | 0,80 | 0,50 |
| | H | 0,88 | 0,70 | 0,70 | 0,32 | 0,50 | 0,30 | 0,90 | 0,65 |
| 40% | B | 0,85 | 0,35 | 0,65 | 0,12 | 0,77 | 0,45 | 0,70 | 0,37 |
| | H | 1,10 | 0,52 | 0,86 | 0,24 | 1,10 | 0,65 | 0,95 | 0,65 |
| 50% | B | 0,70 | 0,15 | 0,67 | 0,05 | 0,81 | 0,39 | 0,77 | 0,41 |
| | H | 0,90 | 0,30 | 0,86 | 0,14 | 1,00 | 0,63 | 0,98 | 0,61 |
| 60% | B | 0,60 | 0,10 | 0,70 | 0,05 | 0,70 | 0,25 | 0,15 | 0,00 |
| | H | 0,80 | 0,20 | 0,85 | 0,12 | 0,80 | 0,35 | 0,35 | 0,15 |
| 70% | B | 0,75 | 0,08 | 0,65 | -0,03 | 0,70 | 0,25 | 0,22 | -,05 |
| | H | 0,90 | 0,16 | 0,90 | 0,05 | 0,80 | 0,35 | 0,45 | 0,15 |
| 80% | B | 0,85 | 0,20 | 0,65 | -0,04 | 0,60 | 0,30 | 0,80 | 0,57 |
| | H | 1,05 | 0,35 | 0,92 | 0,05 | 0,90 | 0,50 | 0,90 | 0,85 |
| 90% | B | 0,80 | 0,15 | 0,71 | -0,03 | 0,65 | 0,43 | 0,79 | 0,57 |
| | H | 0,98 | 0,28 | 0,93 | 0,15 | 0,93 | 0,60 | 0,94 | 0,81 |
| 100% | B | 0,75 | 0,10 | 0,75 | 0,00 | 0,65 | 0,50 | 0,77 | 0,60 |
| | H | 0,95 | 0,25 | 0,95 | 0,25 | 1,00 | 0,70 | 0,97 | 0,80 |

**16.** Verfahren nach Anspruch 15,
**dadurch gekennzeichnet, dass** für jedes aerodynamische Profil (11) optimierte Werte der Koeffizienten (CuBi.j, CvBi.j) der Kontrollpunkte (B0.1, B0.2, B1.1, B1.2, B2.1, B2.2, B3.1, B3.2) in Abhängigkeit von der relativen Dicke t/c des aerodynamischen Profils (11) in der folgenden Tabelle definiert sind:

| t/c | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|---|---|---|---|---|---|---|---|---|
| 20% | 0,85 | 0,22 | 0,37 | 0 | 0,60 | 0 | 0,70 | 0,10 |
| 25% | 0,85 | 0,42 | 0,81 | 0,42 | 0,50 | 0,22 | 0,85 | 0,69 |
| 30% | 0,38 | 0,13 | 0,44 | 0,1 6 | 0,49 | 0,24 | 0,85 | 0,65 |
| 35% | 0,81 | 0,44 | 0,66 | 0,24 | 0,34 | 0,22 | 0,85 | 0,65 |

(fortgesetzt)

| t/c | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|---|---|---|---|---|---|---|---|---|
| 40% | 0,97 | 0,45 | 0,76 | 0,20 | 0,91 | 0,54 | 0,85 | 0,54 |
| 50% | 0,83 | 0,21 | 0,76 | 0,07 | 0,93 | 0,56 | 0,88 | 0,54 |
| 60% | 0,75 | 0,15 | 0,80 | 0,05 | 0,75 | 0,29 | 0,25 | 0,10 |
| 70% | 0,85 | 0,11 | 0,71 | -0,01 | 0,75 | 0,29 | 0,40 | 0 |
| 80% | 0,95 | 0,27 | 0,75 | 0 | 0,73 | 0,45 | 0,85 | 0,69 |
| 90% | 0,86 | 0,21 | 0,81 | 0,09 | 0,78 | 0,53 | 0,88 | 0,69 |
| 100% | 0,82 | 0,16 | 0,83 | 0,16 | 0,78 | 0,57 | 0,89 | 0,69 |

**17.** Verfahren nach einem der Ansprüche 10 bis 16,
**dadurch gekennzeichnet, dass** die Koordinaten (u, v) jedes Punktes, der ein intermediäres dickes aerodynamisches Profil (11) mit einer intermediären relativen Dicke t/c zwischen zwei relativen Dicken, nämlich einer unteren (t/C)min und der oberen (t/C)max, bildet, durch Interpolation aus einem ersten aerodynamischen Profil (11) mit der besagten unteren relativen Dicke (t/C)min und einem zweiten aerodynamischen Profil (11) mit der besagten oberen relativen Dicke (t/c) definiert werden.

**18.** Verfahren nach Anspruch 17,
**dadurch gekennzeichnet, dass** die Ordinate v jedes Punktes des intermediären dicken aerodynamischen Profils (11) mit der besagten relativen Dicke t/c durch die Beziehung

$$v = \frac{(^t/_c)-(^t/_c)_{\min}}{(^t/_c)_{\max}-(^t/_c)_{\min}} \, v_{max} + \left(1 - \frac{(^t/_c)-(^t/_c)_{\min}}{(^t/_c)_{\max}-(^t/_c)_{\min}}\right) v_{min},$$

bestimmt wird, wobei $v_{min}$ eine erste Ordinate eines Punktes des ersten aerodynamischen Profils (11) mit der gleichen Abszisse u wie der Koordinatenpunkt (u,v) des intermediären aerodynamischen Profils (11) ist, und $v_{max}$ eine zweite Ordinate eines Punktes des zweiten aerodynamischen Profils (11) mit der gleichen Abszisse u wie der Koordinatenpunkt (u,v) des intermediären aerodynamischen Profils (11) ist.

**19.** Verfahren nach einem der Ansprüche 10 bis 18,
**dadurch gekennzeichnet, dass** das Verfahren einen ersten komplementären Schritt des Simulierens (104) umfasst, um das aerodynamische Verhalten des Profils (11) zu simulieren, wenn es von einer ersten Luftströmung von der Vorderkante (15) zur Hinterkante (16) und von einer zweiten Luftströmung von der Hinterkante (16) zur Vorderkante (15) überstrichen wird.

**20.** Verfahren nach einem der Ansprüche 10 bis 19,
**dadurch gekennzeichnet, dass** das Verfahren einen zweiten komplementären Schritt des Definierens (105) der dicken aerodynamischen Hülle (1) durch Kombinieren von aerodynamischen Profilen (11), die während des Bestimmens (103) des aerodynamischen Profils (11) definiert wurden, umfasst.

**21.** Verfahren nach Anspruch 20,
**dadurch gekennzeichnet, dass** das Verfahren einen dritten komplementären Schritt (106) des Erhaltens der dicken aerodynamischen Hülle (1) umfasst.

**Claims**

**1.** A thick airfoil shape (1) for arranging between a rotary hub (3) of a rotor (10) of an aircraft (5) and a streamlined portion (22) of a blade (2) of said rotor (10), said thick airfoil shape (1) extending firstly spanwise in a longitudinal direction (X) from a first end zone (13) towards a second end zone (14), and secondly in a transverse direction (Y) from a leading edge (15) to a trailing edge (16), said thick airfoil shape (1) being made up of a succession of thick airfoil profiles (11) situated in planes parallel to a transverse plane ($P_{YZ}$) perpendicular to said spanwise longitudinal direction (X), each thick airfoil profile (11) having a suction side profile (17) and a pressure side profile (18), each thick airfoil profile (11) being defined by a chord c between said leading edge (15) and said trailing edge (16), by a maximum thickness $t$ equal to a maximum distance between said suction side profile (17) and said pressure side profile (18) measured perpendicularly to said chord c, and by a relative thickness $t/c$ equal to the ratio of said maximum thickness $t$ divided by said chord $c,$ said relative thickness $t/c$ being greater than or equal to 20% for each thick airfoil profile (11), each airfoil profile (11) passing via extreme points ($C0$, $C1$, $C2$, $C3$), each extreme point ($C0$, $C1$, $C2$, $C3$) being defined in a reference frame (U,V) attached to said airfoil profile (11) and itself defined by an abscissa axis (U) formed by the direction of said chord c and by an ordinate axis (V) perpendicular to said abscissa axis (U), one unit of said abscissa and ordinate axes (U,V) being equal to said chord c, a first extreme point ($C0$) of coordinates (1,0) being situated at said leading edge (15), a second extreme point $(C2)$ of coordinates (0,0) being situated at said trailing edge (16), and third and fourth extreme points ($C1,C3$) forming said maximum thickness $t$ of said airfoil profile, tangents to each airfoil profile (11) at said third and fourth extreme points ($C1,C3$) being defined parallel to said abscissa axis (U), **characterised in that** the coordinates ($uCi,vCi$) of said third and fourth extreme points ($C1,C3$) in said reference frame (U,V) are defined as a function of said relative thickness $t/c$ and are situated within variation ranges bounded by low values (B) and high values (H) given in the following table:

| $t/c$ | | $uC_1$ | $vC_1$ | $uC_3$ | $vC_3$ |
|---|---|---|---|---|---|
| 20% | B | 0.55 | 0.12 | 0.55 | -0.08 |
| | H | 0.70 | 0.16 | 0.75 | -0.04 |
| 25% | B | 0.63 | 0.14 | 0.55 | -0.11 |
| | H | 0.73 | 0.19 | 0.75 | -0.06 |
| 30% | B | 0.65 | 0.18 | 0.62 | -0.12 |
| | H | 0.75 | 0.22 | 0.72 | -0.08 |
| 35% | B | 0.65 | 0.20 | 0.62 | -0.15 |
| | H | 0.75 | 0.24 | 0.73 | -0.11 |
| 40% | B | 0.48 | 0.23 | 0.45 | -0.17 |
| | H | 0.63 | 0.28 | 0.65 | -0.12 |
| 50% | B | 0.35 | 0.28 | 0.37 | -0.22 |
| | H | 0.49 | 0.37 | 0.57 | -0.13 |
| 60% | B | 0.25 | 0.34 | 0.30 | -0.26 |
| | H | 0.42 | 0.45 | 0.50 | -0.15 |
| 70% | B | 0.20 | 0.44 | 0.20 | -0.26 |
| | H | 0.40 | 0.56 | 0.30 | -0.14 |
| 80% | B | 0.36 | 0.47 | 0.19 | -0.33 |
| | H | 0.52 | 0.57 | 0.31 | -0.23 |
| 90% | B | 0.37 | 0.47 | 0.20 | -0.43 |
| | H | 0.52 | 0.59 | 0.30 | -0.31 |
| 100% | B | 0.40 | 0.45 | 0.22 | -0.55 |
| | H | 0.50 | 0.60 | 0.32 | -0.40 |

2. Thick airfoil shape (1) according to claim 1, **characterised in that** for each airfoil profile (11) optimised values for said coordinates ($uCi,vCi$) of said and fourth extreme points ($C1,C3$) are defined as a function of said relative thickness t/c of said airfoil profile (11) in the following table:

| t/c | $uC_1$ | $vC_1$ | $uC_3$ | $vC_3$ |
|------|-------|--------|-------|--------|
| 20% | 0.65 | 0.148 | 0.65 | -0.052 |
| 25% | 0.71 | 0.17 | 0.66 | -0.08 |
| 30% | 0.72 | 0.20 | 0.66 | -0.10 |
| 35% | 0.69 | 0.22 | 0.68 | -0.13 |
| 40% | 0.55 | 0.26 | 0.51 | -0.14 |
| 50% | 0.42 | 0.325 | 0.42 | -0.175 |
| 60% | 0.32 | 0.39 | 0.35 | -0.21 |
| 70% | 0.31 | 0.50 | 0.23 | -0.20 |
| 80% | 0.42 | 0.54 | 0.24 | -0.28 |
| 90% | 0.44 | 0.555 | 0.26 | -0.345 |
| 100% | 0.445 | 0.565 | 0.275 | -0.435 |

3. Thick airfoil shape (1) according to either claim 1 or 2, **characterised in that** the tangents of each airfoil profile (11) at said leading edge (15) and at said trailing edge (16) are defined parallel to said ordinate axis (V).

4. Thick airfoil shape (1) according to any one of claims 1 to 3, **characterised in that** the coordinates *(u,v)* of each point forming an intermediate thick airfoil profile (11) having an intermediate relative thickness *t/c* lying between lower and upper relative thicknesses $(t/c)_{min}$ and $(t/c)_{max}$ are defined by interpolation from a first airfoil profile (11) having said lower relative thickness $(t/c)_{min}$ and a second airfoil profile having said upper relative thickness $(t/c)_{max}$.

5. Thick airfoil shape (1) according to claim 4, **characterised in that** the ordinate coordinate *v* of each point of said intermediate thick airfoil profile (11) of relative thickness *t/c* is determined by a following relationship:

$$v = \frac{(t/c)-(t/c)_{min}}{(t/c)_{max}-(t/c)_{min}} v_{max} + \left(1 - \frac{(t/c)-(t/c)_{min}}{(t/c)_{max}-(t/c)_{min}}\right) v_{min},$$

$v_{min}$ being a first ordinate coordinate for a point of said first airfoil profile (11) having the same abscissa coordinate *u* as said point of coordinates *(u,v)* of said intermediate airfoil profile (11), and $v_{max}$ being a second ordinate coordinate for a point of said second airfoil profile having the same abscissa coordinate *u* as said point of coordinates *(u,v)* of said intermediate thick airfoil profile (11).

6. Blade (2) having a streamlined portion (22) and a blade root (21), **characterised in that** a thick airfoil shape (1) according to any one of claims 1 to 5 connects said blade (2) root (21) to said streamlined portion (22).

7. Rotor (10) of an aircraft (5), said rotor (10) comprising a hub (3) and at least two blades (2) each having a streamlined portion (22) and a blade root (21), **characterised in that** each blade (2) includes a thick airfoil shape (1) according to any one of claims 1 to 5 connecting said blade root (21) to said streamlined portion (22) so as to reduce the production of wake by said rotor (10) so as to limit the amplitude of unsteadinesses contained in said wake and so as to reduce a frequency signature of said wake.

8. Rotor (10) of an aircraft (5), said rotor (10) comprising a hub (3), at least two blades (2) with structural junction devices (24) respectively connecting each blade (2) to said hub (3) and blade cuffs (25) fairing each structural junction device (24), **characterised in that** each blade cuff (25) is formed by a thick airfoil shape (1) according to any one of claims 1 to 5 so as to reduce the production of wake by said rotor (10) so as to limit the amplitude of unsteadinesses contained in said wake and so as to reduce a frequency signature of said wake.

9. Rotary wing aircraft (5) comprising a fuselage (51), a tail boom (52), at least one stabiliser (54) and at least one rotor (10) having at least two blades (2), **characterised in that** said rotor (10) is according to either claim 7 or claim 8 so that firstly it reduces the production of wake from said rotor (10) and unsteadinesses of said wake, and secondly it limits the appearance of vibration in said tail boom (52) and/or said at least one stabiliser (54) as generated by said wake.

10. Method of obtaining a thick airfoil shape (1) for arranging between a rotary hub (3) of a rotor (10) of an aircraft (5) and a streamlined portion (22) of a blade (2) of said rotor (10), said thick airfoil shape (1) extending firstly spanwise in a longitudinal direction (X) from a first end zone (13) towards a second end zone (14), and secondly in a transverse direction (Y) from a leading edge (15) to a trailing edge (16), said thick airfoil shape (1) being made up of a succession of thick airfoil profiles (11) situated in planes parallel to a transverse plane ($P_{YZ}$) perpendicular to said spanwise longitudinal direction (X), each thick airfoil profile (11) having a suction side profile (17) and a pressure side profile (18), each thick airfoil profile (11) being defined by a chord c between said leading edge (15) and said trailing edge (16), by a maximum thickness $t$ equal to a maximum distance between said suction side profile (17) and said pressure side profile (18) measured perpendicularly to said chord $c$, and by a relative thickness $t/c$ equal to the ratio of said maximum thickness $t$ divided by said chord c, said relative thickness $t/c$ being greater than or equal to 20% for each thick airfoil profile (11), **characterised in that** said method comprises the following steps for defining each airfoil profile (11):

- a first creation step (101) for creating ($m+1$) characteristic points ($A0,... Ai,..., Am$) belonging to said airfoil profile (11), $i$ being a positive integer lying in the range 0 to $m$, each characteristic point ($Ai$) being defined in a reference frame (U,V) attached to said airfoil profile (11) and defined by an abscissa axis (U) formed by the direction of said chord c and by an ordinate axis (V) perpendicular to said abscissa axis (U), one unit of said abscissa and ordinate axes (U,V) being equal to said chord $c$;
- a second creation step (102) for creating control points ($Bi.j$), n control points ($Bi.j$) being situated respectively between two consecutive characteristic points ($Ai,Ai+1$) and being construction points for constructing said airfoil profile (11) between said two constructive characteristic points ($Ai, Ai+1$), $n$ being a positive integer greater than or equal to 2, $j$ being a positive integer lying in the range 1 to n, ($i+1$) being replaced by the value zero "0" when i is equal to $m$; and
- a determination step (103) for determining said airfoil profile (11), ($m+1$) curves respectively connecting together two consecutive characteristic points ($Ai,Ai+1$) and being constructed from said control points ($Bi.j$), said ($m+1$) curves (41-44) being connected in pairs to form said airfoil profile (11), said airfoil profile (11) passing through extreme points ($C0, C1, C2, C3$), a first extreme point ($C0$) of coordinates (1,0) being situated at said leading edge (15), a second extreme point ($C2$) of coordinates (0,0) being situated at said trailing edge (16), and third and fourth extreme points ($C1,C3$) forming said maximum thickness $t$ of said airfoil profile, the tangents of said airfoil profile at said third and fourth extreme points ($C1,C3$) being defined parallel to said abscissa axis (U) and the coordinates ($uCi,vCi$) of said third and fourth extreme points ($C1,C3$) in said reference frame (U,V) being defined as a function of said relative thickness $t/c$ and being situated within variation ranges bounded by low values (B) and high values (H) given in the following table:

| $t/c$ | | $uC_1$ | $vC_1$ | $uC_3$ | $vC_3$ |
|---|---|---|---|---|---|
| 20% | B | 0.55 | 0.12 | 0.55 | -0.08 |
| | H | 0.70 | 0.16 | 0.75 | -0.04 |
| 25% | B | 0.63 | 0.14 | 0.55 | -0.11 |
| | H | 0.73 | 0.19 | 0.75 | -0.06 |
| 30% | B | 0.65 | 0.18 | 0.62 | -0.12 |
| | H | 0.75 | 0.22 | 0.72 | -0.08 |
| 35% | B | 0.65 | 0.20 | 0.62 | -0.15 |
| | H | 0.75 | 0.24 | 0.73 | -0.11 |
| 40% | B | 0.48 | 0.23 | 0.45 | -0.17 |
| | H | 0.63 | 0.28 | 0.65 | -0.12 |
| 50% | B | 0.35 | 0.28 | 0.37 | -0.22 |
| | H | 0.49 | 0.37 | 0.57 | -0.13 |

(continued)

| $t/c$ | | $uC_1$ | $vC_1$ | $uC_3$ | $vC_3$ |
|---|---|---|---|---|---|
| 60% | B | 0.25 | 0.34 | 0.30 | -0.26 |
| | H | 0.42 | 0.45 | 0.50 | -0.15 |
| 70% | B | 0.20 | 0.44 | 0.20 | -0.26 |
| | H | 0.40 | 0.56 | 0.30 | -0.14 |
| 80% | B | 0.36 | 0.47 | 0.19 | -0.33 |
| | H | 0.52 | 0.57 | 0.31 | -0.23 |
| 90% | B | 0.37 | 0.47 | 0.20 | -0.43 |
| | H | 0.52 | 0.59 | 0.30 | -0.31 |
| 100% | B | 0.40 | 0.45 | 0.22 | -0.55 |
| | H | 0.50 | 0.60 | 0.32 | -0.40 |

**11.** Method according to claim 10, **characterised in that** for each airfoil profile (11), optimised values for said coordinates ($uCi,vCi$) of said third and fourth extreme points ($C1,C3$) are defined as a function of said relative thickness $t/c$ of said airfoil profile in the following table:

| $t/c$ | $uC_1$ | $vC_1$ | $uC_3$ | $VC_3$ |
|---|---|---|---|---|
| 20% | 0.65 | 0.148 | 0.65 | -0.052 |
| 25% | 0.71 | 0.17 | 0.66 | -0.08 |
| 30% | 0.72 | 0.20 | 0.66 | -0.10 |
| 35% | 0.69 | 0.22 | 0.68 | -0.13 |
| 40% | 0.55 | 0.26 | 0.51 | -0.14 |
| 50% | 0.42 | 0.325 | 0.42 | -0.175 |
| 60% | 0.32 | 0.39 | 0.35 | -0.21 |
| 70% | 0.31 | 0.50 | 0.23 | -0.20 |
| 80% | 0.42 | 0.54 | 0.24 | -0.28 |
| 90% | 0.44 | 0.555 | 0.26 | -0.345 |
| 100% | 0.445 | 0.565 | 0.275 | -0.435 |

**12.** Method according to either claim 10 or 11, **characterised in that** said control points ($Bi,j$) are situated in a zone representing a third range [-25%, 125%] of a zone covered by said two consecutive characteristic points ($Ai,Ai+1$) so as to avoid excessive curvature for each airfoil profile (11) and so as to avoid the appearance of points of inflection or of cusps in said airfoil profile (11) during said determination (103) of said airfoil profile.

**13.** Method according to any one of claims 10 to 12, **characterised in that** during said first creation step (101), the tangents of said airfoil profile (11) at said first and second extreme points ($C0,C2$) are defined as parallel to said ordinate axis (V).

**14.** Method according to any one of claims 10 to 13, **characterised in that** during said first creation step (101), four characteristic points ($A0,A1,A2,A3$) are created, said characteristic points ($A0,A1,A2,A3$) being said extreme points ($C0,C1,C2,C3$).

**15.** Method according to claim 14, **characterised in that** said four curves (41-44) are constituted by Bezier curves of order 3, said tangents to said airfoil profile (11) at said first and second characteristic points ($A0,A2$) are defined parallel to said ordinate axis (V), and said control points (*B0.1,B0.2,B1.1, B1.2,B2.1,B2.2,B3.1,B3.2*) are defined as a function of said relative thickness *t/c* and in accordance with the table below which defines for said control points (*Bi,j*), variation ranges bounded by low (B) and high (H) values for coefficients (*CuBi.j, CvBi.j*), said coefficients (*CuBi.j,CvBi.j*) defining the positions of said control points (*Bi.j*) relative to said pairs of consecutive characteristic points (*Ai,Ai+1*), each coefficient (*CuBi.j,CvBi.j*) being multiplied by a distance between said pair of consecutive characteristic points (*Ai,Ai+1*) in parallel respectively with said abscissa axis (U) and said ordinate axis (V) in order to define the position of said control point (*Bi.j*) relative to the characteristic point (*Ai*) in parallel respectively with said abscissa axis (U) and said ordinate axis (V):

| *t/c* | | $CvB_{0.1}$ | $CuB_{0.2}$ | $CuB_{1.1}$ | $CvB_{1.2}$ | $CvB_{2.1}$ | $CuB_{2.2}$ | $CvB_{3.1}$ | $CuB_{3.2}$ |
|---|---|---|---|---|---|---|---|---|---|
| 20% | B | 0.80 | 0.10 | 0.30 | -0.10 | 0.50 | 0 | 0.65 | 0 |
| | H | 0.90 | 0.25 | 0.40 | 0.10 | 0.90 | 0.05 | 0.85 | 0.15 |
| 25% | B | 0.80 | 0.30 | 0.80 | 0.30 | 0.40 | 0.20 | 0.80 | 0.50 |
| | H | 0.90 | 0.50 | 0.85 | 0.60 | 0.80 | 0.30 | 0.90 | 0.80 |
| 30% | B | 0.35 | 0.10 | 0.40 | 0.05 | 0.35 | 0.20 | 0.80 | 0.50 |
| | H | 0.45 | 0.20 | 0.50 | 0.25 | 0.70 | 0.30 | 0.90 | 0.65 |
| 35% | B | 0.74 | 0.34 | 0.60 | 0.22 | 0.25 | 0.15 | 0.80 | 0.50 |
| | H | 0.88 | 0.70 | 0.70 | 0.32 | 0.50 | 0.30 | 0.90 | 0.65 |
| 40% | B | 0.85 | 0.35 | 0.65 | 0.12 | 0.77 | 0.45 | 0.70 | 0.37 |
| | H | 1.10 | 0.52 | 0.86 | 0.24 | 1.10 | 0.65 | 0.95 | 0.65 |
| 50% | B | 0.70 | 0.15 | 0.67 | 0.05 | 0.81 | 0.39 | 0.77 | 0.41 |
| | H | 0.90 | 0.30 | 0.86 | 0.14 | 1. 00 | 0.63 | 0.98 | 0.61 |
| 60% | B | 0.60 | 0.10 | 0.70 | 0.05 | 0.70 | 0.25 | 0.15 | 0.00 |
| | H | 0.80 | 0.20 | 0.85 | 0.12 | 0.80 | 0.35 | 0.35 | 0.15 |
| 70% | B | 0.75 | 0.08 | 0.65 | -0.03 | 0.70 | 0.25 | 0.22 | -.05 |
| | H | 0.90 | 0.16 | 0.90 | 0.05 | 0.80 | 0.35 | 0.45 | 0.15 |
| 80% | B | 0.85 | 0.20 | 0.65 | -0.04 | 0.60 | 0.30 | 0.80 | 0.57 |
| | H | 1.05 | 0.35 | 0.92 | 0.05 | 0.90 | 0.50 | 0.90 | 0.85 |
| 90% | B | 0.80 | 0.15 | 0.71 | -0.03 | 0.65 | 0.43 | 0.79 | 0.57 |
| | H | 0.98 | 0.28 | 0.93 | 0.15 | 0.93 | 0.60 | 0.94 | 0.81 |
| 100% | B | 0.75 | 0.10 | 0.75 | 0.00 | 0.65 | 0.50 | 0.77 | 0.60 |
| | H | 0.95 | 0.25 | 0.95 | 0.25 | 1.00 | 0.70 | 0.97 | 0.80 |

**16.** Method according to claim 15, **characterised in that** for each airfoil profile (11), optimised values for said coefficients (*CuBi.j,CvBi.j*) of said control points (*B0.1,B0.2,B1.1,B1.2, B2.1,B2.2,B3.1,B3.2*) are defined as a function of said relative thickness *t/c* of said airfoil profile (11) in the following table:

| *t/c* | $CvB_{0.1}$ | $CuB_{0.2}$ | $CuBu_{1.1}$ | $CvB_{1.2}$ | $CvB_{2.1}$ | $CuB_{2.2}$ | $CvB_{3.1}$ | $CuB_{3.2}$ |
|---|---|---|---|---|---|---|---|---|
| 20% | 0.85 | 0.22 | 0.37 | 0 | 0.60 | 0 | 0.70 | 0.10 |
| 25% | 0.85 | 0.42 | 0.81 | 0.42 | 0.50 | 0.22 | 0.85 | 0.69 |
| 30% | 0.38 | 0.13 | 0.44 | 0.16 | 0.49 | 0.24 | 0.85 | 0.65 |
| 35% | 0.81 | 0.44 | 0.66 | 0.24 | 0.34 | 0.22 | 0.85 | 0.65 |

(continued)

| $t/c$ | $CvB_{0.1}$ | $CuB_{0.2}$ | $CuBu_{1.1}$ | $CvB_{1.2}$ | $CvB_{2.1}$ | $CuB_{2.2}$ | $CvB_{3.1}$ | $CuB_{3.2}$ |
|---|---|---|---|---|---|---|---|---|
| 40% | 0.97 | 0.45 | 0.76 | 0.20 | 0.91 | 0.54 | 0.85 | 0.54 |
| 50% | 0.83 | 0.21 | 0.76 | 0.07 | 0.93 | 0.56 | 0.88 | 0.54 |
| 60% | 0.75 | 0.15 | 0.80 | 0.05 | 0.75 | 0.29 | 0.25 | 0.10 |
| 70% | 0.85 | 0.11 | 0.71 | -0.01 | 0.75 | 0.29 | 0.40 | 0 |
| 80% | 0.95 | 0.27 | 0.75 | 0 | 0.73 | 0.45 | 0.85 | 0.69 |
| 90% | 0.86 | 0.21 | 0.81 | 0.09 | 0.78 | 0.53 | 0.88 | 0.69 |
| 100% | 0.82 | 0.16 | 0.83 | 0.16 | 0.78 | 0.57 | 0.89 | 0.69 |

**17.** Method according to any one of claims 10 to 16, **characterised in that** the coordinates *(u,v)* of each point forming an intermediate thick airfoil profile (11) having an intermediate relative thickness *t/c* lying between lower and upper relative thickness $(t/c)_{min}$ and $(t/c)_{max}$ are defined by interpolation from a first airfoil profile (11) having said lower relative thickness $(t/c)_{min}$ and a second airfoil profile (11) having said upper relative thickness $(t/c)_{max}$.

**18.** Method according to claim 17, **characterised in that** the ordinate coordinate *v* of each point of said intermediate thick airfoil profile (11) of relative thickness *t/c* is determined by the following relationship:

$$v = \frac{(t/c) - (t/c)_{min}}{(t/c)_{max} - (t/c)_{min}} v_{max} + \left(1 - \frac{(t/c) - (t/c)_{min}}{(t/c)_{max} - (t/c)_{min}}\right) v_{min},$$

$v_{min}$ being a first ordinate coordinate for a point of said first airfoil profile having the same abscissa coordinate *u* as said point of coordinates *(u,v)* of said intermediate airfoil profile (11), and $v_{max}$ being a second ordinate coordinate for a point of said second airfoil profile (11) having the same abscissa coordinate *u* as said point of coordinates *(u,v)* of said intermediate thick airfoil profile (11).

**19.** Method according to any one of claims 10 to 18, **characterised in that** said method includes a simulation first additional step (104) for simulating the aerodynamic behaviour of said airfoil profile (11) when it is swept by a first air stream from said leading edge (15) towards said trailing edge (16) and when it is swept by a second air stream from said trailing edge (16) towards said leading edge (15).

**20.** Method according to any one of claims 10 to 19, **characterised in that** said method includes a definition second additional step (105) for defining said thick airfoil shape (1) by combining airfoil profiles (11) defined during said determination step (103) of determining said airfoil profile.

**21.** Method according to claim 20, **characterised in that** said method includes an obtaining third additional step (106) for obtaining said thick airfoil shape (1).

Fig.1

Fig.2

Fig.3

Fig.4

25,1

11,17

11,17

13

2

15

14

27

22

23

11,18

16

11,18

Z

X — Y

26

101

102

103

104

105

106

Fig.6

28

22

27

28

26

11,17

23,1

15

11,17

21

Z

X

y

14

11,18

16

13

11,18

Fig.5

38

Fig.7

Fig.8

Fig.9

Fig.10

Fig.11

Fig.12

Fig.13

Fig.14

Fig.15

Fig.16

Fig.17

Fig.18

Fig.19

Fig.20

Fig.21

## RÉFÉRENCES CITÉES DANS LA DESCRIPTION

**Documents brevets cités dans la description**

- FR 2626841
- FR 2765187
- EP 2593670 A
- US 5474425 A
- US 2012057987 A